(19) Europäisches Patentamt / European Patent Office / Office européen des brevets

(11) **EP 4 190 593 B1**

(12) # EUROPEAN PATENT SPECIFICATION

(45) Date of publication and mention of the grant of the patent:
**21.01.2026 Bulletin 2026/04**

(21) Application number: **21858137.9**

(22) Date of filing: **29.07.2021**

(51) International Patent Classification (IPC):
***B60C 9/20*** *(2006.01)* ***B60C 3/04*** *(2006.01)*
***B60C 11/00*** *(2006.01)* ***B60C 11/03*** *(2006.01)*
***B60C 11/13*** *(2006.01)* ***B60C 1/00*** *(2006.01)*

(52) Cooperative Patent Classification (CPC):
**B60C 11/13; B60C 3/04; B60C 9/2006; B60C 9/2009; B60C 11/033;** B60C 2001/0066; B60C 2009/2061; B60C 2009/2064; B60C 2011/0353; B60C 2011/0355; B60C 2200/04; Y02T 10/86

(86) International application number:
**PCT/JP2021/028145**

(87) International publication number:
**WO 2022/038989 (24.02.2022 Gazette 2022/08)**

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.08.2020 JP 2020139407**

(43) Date of publication of application:
**07.06.2023 Bulletin 2023/23**

(73) Proprietor: **Sumitomo Rubber Industries, Ltd.**
**Kobe-shi, Hyogo 651-0072 (JP)**

(72) Inventors:
- **HAMAMURA, Kenji**
  **Kobe-shi, Hyogo 651-0072 (JP)**
- **KAWAI, Hiroki**
  **Kobe-shi, Hyogo 651-0072 (JP)**
- **TOYA, Subaru**
  **Kobe-shi, Hyogo 651-0072 (JP)**

(74) Representative: **Manitz Finsterwald**
**Patent- und Rechtsanwaltspartnerschaft mbB**
**Martin-Greif-Straße 1**
**80336 München (DE)**

(56) References cited:

| | |
|---|---|
| **WO-A1-2015/159538** | **CN-A- 109 627 509** |
| **JP-A- 2007 084 035** | **JP-A- 2008 156 418** |
| **JP-A- 2008 156 418** | **JP-A- 2012 025 308** |
| **JP-A- 2013 122 038** | **JP-A- 2015 030 428** |
| **JP-A- 2016 074 283** | **JP-A- 2016 074 298** |
| **JP-A- 2016 074 408** | **JP-A- 2016 193 688** |
| **JP-A- 2018 167 753** | **JP-A- 2019 104 256** |
| **JP-A- H0 747 806** | **JP-B1- 6 699 794** |
| **US-A1- 2008 264 543** | **US-A1- 2017 021 669** |
| **US-A1- 2018 122 688** | **US-A1- 2018 126 785** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 190 593 B1

## Description

[TECHNICAL FIELD]

The present invention relates to a pneumatic tire.

[BACKGROUND ART]

In recent years, from the viewpoint of increasing interest in environmental issues and economic efficiency, there has been a growing demand for fuel efficiency in automobiles, and there is a strong demand for improved fuel efficiency also in pneumatic tires (hereinafter, simply referred to as "tires") installed in automobiles.
The fuel efficiency of a tire can be evaluated by rolling resistance, and it is known that the smaller the rolling resistance, the better the fuel efficiency of the tire.
Therefore, conventionally, it has been proposed to reduce the rolling resistance by devising the formulation of the rubber composition constituting the tread portion of the tire (for example, Patent Documents 1 to 4).

[PRIOR ART DOCUMENTS]

[PATENT DOCUMENT]

[Patent Document 1] JP2018-178034A
[Patent Document 2] JP2019-089911A
[Patent Document 3] WO2018 / 186367A
[Patent Document 4] JP2019-206643A
[Patent Document 5] US 2017/021 669 A1 discloses a pneumatic tire comprising an inner liner, wherein a thickness of the inner liner is 1.5 mm or more; and in a case where a sectional width SW of the tire is less than 165 mm, a ratio of the sectional width SW to an outer diameter OD of the tire, SW/OD, is 0.26 or less; and in a case where the sectional width SW of the tire is 165 mm or more, the sectional width SW and the outer diameter OD of the tire satisfy $OD \geqq 2.135 \times SW + 282.3$.
[Patent Document 6] JP 2018 167753 A discloses a pneumatic tire having a laminated structure of belts.
[Patent Document 7]JP 2008 156418 A discloses a rubber composition for coating a steel cord and a tire comprising a belt or breaker obtained by coating a steel cord with the respective rubber composition.

[SUMMARY OF INVENTION]

[PROBLEM TO BE SOLVED BY THE INVENTION]

However, although the tire manufactured by the conventional technology described above can reduce the rolling resistance, there is a possibility that the steering stability may change significantly between low-speed running and high-speed running. And these tires cannot be said to have sufficient durability.
Therefore, an object of the present invention is to provide a pneumatic tire in which the change in steering stability between low-speed running and high-speed running is sufficiently suppressed and its durability is sufficiently improved.

[MEANS FOR SOLVING THE PROBLEM]

The present discloser has diligently studied the solution to the above-mentioned problem, found that the above-mentioned problem can be solved by the invention described below, and has completed the present disclosure.
The present invention is;

a pneumatic tire having a belt layer radially inward of the tread portion, in which;
the ratio of loss tangent(tan δ) to complex elastic modulus (E*: MPa), (tan δ/ E*), of the rubber composition constituting the belt layer, measured under the conditions of 70°C, frequency of 10 Hz, initial strain of 5%, and dynamic strain rate of 1%, is 0.002 or more and 0.017 or less; and the tire satisfies following (formula 1) and (formula 4),

$$1816 \leqq (Dt^2 \times \pi / 4) / Wt \leqq 2827.4 \cdots \text{(formula 1)}$$

$$[(V + 2.5\times10^7) / Wt] \leqq 2.88 \times 10^5 \cdots \text{(formula 4)},$$

, where the cross-sectional width of the tire is Wt (mm), the outer diameter is Dt (mm), and the volume of the space occupied by the tire is the virtual volume V ($mm^3$), when the tire is installed on a standardized rim and the internal pressure is 250 kPa
wherein the virtual volume V ($mm^3$) of the tire is calculated by the following formula:

$$V = [(Dt/2)^2 - \{(Dt/2) - Ht\}^2] \times \pi \times Wt,$$

based on the outer diameter of tire Dt (mm), the tire cross-sectional height Ht (mm), and the cross-sectional width of tire Wt (mm), in the state the tire is installed on a standardized rim, the internal pressure is 250 kPa and no load is applied.

[THE EFFECT OF THE INVENTION]

According to the present disclosure, it is possible to provide a pneumatic tire in which changes in steering stability between low-speed running and high-speed running is sufficiently suppressed and its durability is sufficiently improved.

[EMBODIMENTS FOR CARRYING OUT THE INVENTION]

[1] Features of the tire of the present invention

First, the features of the tire according to the present invention will be described.

1. Overview

First, the tire according to the present invention is characterized in that it is a pneumatic tire having a belt layer radially inward of the tread portion, in which the ratio of loss tangent(tan δ) to complex elastic modulus (E*: MPa), (tan δ/E*), of the rubber composition constituting the belt layer, measured under the conditions of 70°C, frequency of 10 Hz, initial strain of 5%, and dynamic strain rate of 1%, is 0.002 or more and 0.017 or less; and
The tire according to the present invention is characterized also in that, when the cross-sectional width of the tire is Wt (mm), the outer diameter is Dt (mm), and the volume of the space occupied by the tire is the virtual volume V ($mm^3$), when the tire is installed on a standardized rim and the internal pressure is 250 kPa, the tire satisfies following (formula 1) and (formula 4):

$$1816 \leqq (Dt^2 \times \pi/4) / Wt \leqq 2827.4 \cdots \text{(formula 1)}$$

$$[(V + 2.5 \times 10^7) / Wt] \leqq 2.88 \times 10^5 \cdots \text{(formula 4)}$$

With regard to the physical properties of the rubber composition forming the belt layer and the shape of the tire, by providing the characteristics described above, it is possible to provide a pneumatic tire in which the changes in steering stability between low-speed running and high-speed running are sufficiently suppressed and the durability is sufficiently improved.
In the above description, the "standardized rim" is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK ". In the case of tires that are not specified in the standard, it refers a rim that can be assembled and can maintain internal pressure, that is, the rim that does not cause air leakage from between the rim and the tire, and has the smallest rim diameter, and then the narrowest rim width.
Further, the outer diameter Dt of the tire is the outer diameter of the tire installed on a standardized rim, having an internal pressure of 250 kPa and in a no-load state. The cross-sectional width Wt (mm) of the tire is the width of tire installed on a standardized rim, having an internal pressure of 250 kPa and in a no-load state, and is the distance excluding patterns, letters, and the like on the tire side from the linear distance between the sidewalls (total width of the tire) including all the

patterns, letters and the like on the tire side.

Further, the virtual volume V ($mm^3$) of the tire is calculated by the following formula:

$$V = [(Dt/2)^2 - \{(Dt/2) - Ht\}^2] \times \pi \times Wt$$

based on the outer diameter of tire Dt (mm), the tire cross-sectional height (distance from the bottom of the bead to the outermost surface of the tread; 1/2 of the difference between the tire outer diameter and the nominal rim diameter) Ht (mm), and the cross-sectional width of tire Wt (mm), in the state the tire is installed on a standardized rim, the internal pressure is 250 kPa and no load is applied.

2. Mechanism of effect manifestation in tire according to the present invention

The mechanism of effect manifestation in the tire according to the present invention, that is, the mechanism of sufficiently suppressing the change in steering stability between low-speed running and high-speed running and sufficiently improving durability, is presumed as follows.

(1) Tire shape

As described above, in the present invention, the cross-sectional width Wt (mm) and the outer diameter Dt (mm) of the tire are tried to satisfy

$$1816 \leqq (Dt^2 \times \pi/4) / Wt \leqq 2827.4 \quad \text{(formula 1).}$$

By increasing $[(Dt/2)^2 \times \pi) = (Dt^2 \times \pi/4)]$, the area when the tire is viewed from the lateral direction, with respect to the cross-sectional width Wt of the tire and satisfying the numerical range specified in formula 1, it is considered that the moment of inertia during rolling of the tire can be increased, so that the steering stability is improved.

In (formula 1), $(Dt^2 \times \pi/4) / Wt$ is 1816 or more, preferably 1822 or more, further preferably 1870 or more, further preferably 1963.4 or more, further preferably 2014 or more, further preferably 2021 or more, further preferably 2032 or more, further preferably 2045 or more, and further preferably 2107 or more.

However, such a narrow tire has a large centrifugal force during rolling, so the radius of the tire grows greatly during rolling, and there is a risk that damage may occur, when an impact is applied to the tread portion that has become thinner accordingly. In addition, when running at high speeds, centrifugal force tends to cause the outer diameter to grow larger, so there is a risk that the steering stability will change significantly compared to when running at normal low speeds.

Therefore, in the present invention, the virtual volume V ($mm^3$) and the cross-sectional width Wt (mm) of the tire are tried to satisfy $[(V + 2.5 \times 10^7) / Wt] \leqq 2.88 \times 10^5$ (formula 4).

In this way, it is considered that, by reducing the virtual volume V of the tire in accordance with the decrease in the cross-sectional width Wt of the tire, and reducing the volume of the tire itself, the growth rate of the outer diameter due to the centrifugal force can be reduced, and it is considered that the damage resistance, when an impact is applied on the tread portion, can be improved. In addition, by suppressing the growth of the outer diameter of the tire, it is considered that the change in steering stability during high-speed running can also be reduced.

Further, $[(V + 2.5 \times 10^7) / Wt]$ is further preferably $2.85\times10^5$ or less, further preferably $2.78\times10^5$ or less, further preferably $2.75\times10^5$ or less, further preferably $2.71\times10^5$ or less, further preferably $2.69\times10^5$ or less, further preferably 2.68×105 or less, and further preferably 2.66×105 or less.

(2) Rubber composition constituting belt layer

In the present invention, the ratio of the loss tangent (tan $\delta$) to the complex elastic modulus (E*: MPa), (tan $\delta$/E*), measured under the conditions of 70°C, frequency of 10 Hz, initial strain of 5%, and dynamic strain rate of 1%, is set to be 0.002 or more and 0.017 or less.

As a result, heat generation of the belt layer due to deformation of the tread portion during rolling is suppressed to suppress softening, and the rigidity of the belt layer can be secured satisfactorily, thereby capable of further suppressing the growth of the outer diameter of tire. Therefore, it is considered that the change in steering stability between low-speed running and high-speed running can be sufficiently suppressed, and durability can be sufficiently improved.

The (tan $\delta$/E*) is more preferably 0.015 or less, further preferably 0.014 or less, further preferably 0.01 or less, and particularly preferably 0.009 or less. As a result, it is considered that heat generation due to deformation of the tread portion during rolling can be further suppressed, and the rigidity of the belt layer can be satisfactorily secured.

The loss tangent (tan $\delta$) and the complex elastic modulus (E*) described above can be measured using, for

example, a viscoelasticity measuring device of "Eplexor (registered trademark)" manufactured by GABO.

[2] More preferable embodiment of the tire according to the present invention.

The tire according to the present invention can obtain a larger effect by taking the following embodiment.

1. Aspect ratio

The tire according to the present invention is preferably a tire having an aspect ratio of 40% or more, whereby the area of the side portion increases and the side portion extends, so that it is possible to suppress the shape change of the tread portion during high-speed running, and to further suppress the growth of the outer diameter of the tire.
The aspect ratio (%) described above can be obtained by the following formula using the cross-sectional height Ht (mm) and the cross-sectional width Wt (mm) of the tire when the internal pressure is 250 kPa.

$$(Ht/Wt) \times 100 (\%)$$

The aspect ratio is more preferably 41% or more, further preferably 45% or more, further preferably 47.5% or more, further preferably 49% or more, further preferably 50% or more, further preferably 52.5% or more, further preferably 53% or more, further preferably 55% or more, and further preferably 58% or more. There is no particular upper limit, but for example, it is 100% or less.

2. Relationship between (tan δ/E*) and Wt (mm)

It is considered that the wider the width of the tire, the wider the contact area, and the greater the contribution of the reaction force due to the shear deformation of the belt layer. In such a state, if softening occurs due to heat generation of the belt layer, it is likely to have a large effect on steering stability.
The present discloser thought that in order to prevent this, it is necessary to reduce the heat generation factor of the belt layer corresponding to the expansion of the tire width, and has examined the relation of (tan δ/E*) which is an index related to the heat generation of the belt layer, and Wt which is an index related to the width. As a result, it was found that, even with wide tires, if $[(\tan\delta/E^*)/Wt]\times 1000 \leqq 0.60$ (formula 5) is satisfied, the deformation of the belt layer and the increase in heat generation are suppressed and the change remains small, and the steering stability and durability performance were improved.
It was found that $[(\tan\delta/E^*)/Wt] \times 1000$ is more preferably 0.55 or less, further preferably 0.08 or less, further preferably 0.07 or less, further preferably 0.06 or less, further preferably 0.05 or less, and further preferably 0.04 or less.

3. Distance from tread surface

A tire has a tread portion with a certain thickness that contacts the road surface. The tread portion heats up when it contacts the ground. It is possible to keep the temperature constant because the tread portion is exposed to the air when it leaves the road surface, but it is considered that it becomes difficult heat generated in the belt layer is released to the air as thickness of the tread portion increases.
The present discloser thought that, in order to prevent this, it is necessary to reduce the distance T (mm) from the tread surface to the belt layer and the factors (tan δ/E*), which are indices related to heat generation of the belt layer, and has examined the relation between the distance T (mm) from the tread surface to the belt layer and the factors. As a result, it was found that if $(\tan\delta/E^*) \times T \leqq 1.00$ (formula 7) is satisfied, sufficient durability can be obtained even if the belt layer is far from the tread surface.
The distance from the tread surface to the belt layer referred here means the maximum vertical distance from the surface of land portion to the belt layer, if there is a land portion that passes through the equatorial plane, in the tire cross section. If no land portion passes through the equatorial plane, it refers to the maximum vertical distance from the surface of the land portion closest to the equatorial plane to the belt layer.
Then, it was found that $(\tan\delta/E^*) \times T \leq 0.85$ (formula 8) is more preferable, and it is further preferably 0.14 or less, further preferably 0.13 or less, further preferably 0.12 or less, further preferably 0.10 or less, further preferably 0.09 or less, and even more preferably 0.08 or less.

4. Tread groove

The tire according to the present invention has a circumferential groove continuously extending in the tire

circumferential direction in the tread portion. The ratio of the groove width $L_{80}$ at a depth of 80% of the maximum depth of the circumferential groove to the groove width $L_0$ of the circumferential groove on the ground contact surface of the tread portion ($L_{80}$ / $L_0$) is preferably 0.3 to 0.7. As a result, it is possible to suppress the movement of the entire land portion on the bottom surface of the land portion of the tread portion, thereby sufficiently suppressing uneven wear of the tread portion and improving the durability during high-speed running. The ratio is more preferably 0.35 to 0.65, further preferably 0.40 to 0.60, and particularly preferably 0.45 to 0.55.

The above-mentioned $L_0$ and $L_{80}$ refer to the linear distance ($L_0$) between the groove edges on the tread surface of the tread circumferential groove of a tire, and to the minimum distance ($L_{80}$) between the groove walls at a position where the groove depth is 80%, respectively, in a state where the tire is installed on a standardized rim, the internal pressure is 250 kPa, and no load is applied. To put it simply, they can be obtained by putting the bead portion of the section cut out in the radial direction with a width of 2 to 4 cm in a pressed state according to the rim width.

It is preferable that the tread portion has a plurality of circumferential grooves, and the total cross-sectional area of the plurality of circumferential grooves is 10 to 30% of the cross-sectional area of the tread portion. It is considered that this makes it possible to suppress the movement of the tread portion, and uneven wear of the tread portion during high-speed running can be suppressed and the durability can be improved. It is more preferably 15 to 27%, further preferably 18 to 25%, and particularly preferably 21 to 23%.

The cross-sectional area of the circumferential groove refers to the total value of the area composed of a straight line connecting the ends of the tread circumferential groove and a groove wall in a tire installed on a standardized rim, having an internal pressure of 250 kPa and in a no-load state. To put it simply, they can be obtained by putting the bead portion of the section cut out in the radial direction with a width of 2 to 4 cm in a pressed state according to the rim width.

Further, it is preferable that the tread portion has a plurality of lateral grooves extending in the tire axial direction, and the total volume of the plurality of lateral grooves is 2.0 to 5.0% of the volume of the tread portion. It is considered that this makes it possible to suppress the movement of the tread portion, suppress the uneven wear, and improve the durability. It is more preferably 2.2 to 4.0%, further preferably 2.5 to 3.5%, and particularly preferably 2.7 to 3.0%.

The volume of the lateral groove described above refers to the total volume of the volume composed of the surface connecting the ends of the lateral groove and the groove wall in a tire installed on a standardized rim, having an internal pressure of 250 kPa and in a no-load state. To put it simply, it can be obtained by calculating the volume of each lateral groove and multiplying it by the number of grooves, in a state where the bead portion of the section cut out in the radial direction with a width of 2 to 4 cm is pressed down according to the rim width. Further, the volume of the tread portion can be calculated by calculating the area of the portion excluding the lateral groove from the section and multiplying it by the outer diameter, then obtaining the difference between the calculation result and the volume of the lateral groove.

In order to suppress uneven wear of the tread portion and further improve the durability, it is preferred that these lateral grooves include a lateral groove having ratio (Gw/Gd) of groove width Gw to groove depth Gd, of 0.50 to 0. 80. The ratio is more preferably 0.53 to 0.77, further preferably 0.55 to 0.75, and particularly preferably 0.60 to 0.70.

The groove width and groove depth of the lateral groove described above refer to the maximum length of the straight lines connecting the tread surface ends of the lateral groove, which are perpendicular to the groove direction, and to the maximum depth of the lateral groove, respectively, in the tire in a state where the internal pressure is 250 kPa and no load is applied. To put it simply, it can be calculated in a state where the bead portion of the section cut out in the radial direction with a width of 2 to 4 cm is put down in a pressed state according to the rim width.

4. Tire shape

In the tire according to the present invention, when the tire is installed on a standardized rim and the internal pressure is 250 kPa, the specific outer diameter Dt (mm) is preferably, for example, 515 mm or more, more preferably 558 mm or more, further preferably 585 mm or more, further preferably 648 mm or more, further preferably 658 mm or more, further preferably 662 mm or more, further preferably 664 mm or more, further preferably 665 mm or more, further preferably 671 mm or more, and most preferably 673 mm or more.

On the other hand, it is preferably less than 843 mm, more preferably 735 mm or less, further preferably less than 725 mm, further preferably 719 mm or less, further preferably 717 mm or less, further preferably 716 mm or less, further preferably 714 mm or less, further preferably 711 mm or less, further preferably less than 707 mm, further preferably 691 mm or less, further preferably 690 mm or less, further preferably less than 685 mm, further preferably 680 mm or less, and further preferably 675 mm or less.

The specific cross-sectional width Wt (mm) is preferably 115 mm or more, more preferably 130 mm or more, further preferably 150 mm or more, further preferably 170 mm or more, further preferably 174 mm or more, further preferably 175 mm or more, further preferably 176 mm or more, further preferably 178 mm or more, further preferably 181 mm or more, further preferably 183 mm or more, further preferably 175 mm or more, and particularly preferably 185 mm, and most preferably 193 mm or more.

On the other hand, it is preferably less than 305 mm, more preferably less than 245 mm, further preferably 235

mm or less, further preferably 231 mm or less, further preferably 230 mm or less, further preferably 229 mm or less, further preferably 228 mm or less, further preferably 224 mm or less, further preferably less than 210 mm, further preferably less than 205 mm, further preferably 203 mm or less, further preferably 202 mm or less, further preferably 200 mm or less, and further preferably less than 200 mm.

The specific cross-sectional height Ht (mm) is, for example, preferably 37 mm or more, more preferably 69 mm or more, further preferably 70 mm or more, further preferably 71 mm or more, further preferably 77 mm or more, further preferably 78 mm or more, further preferably 79 mm or more, further preferably 80 mm or more, further preferably 87 mm or more, further preferably 89mm or more, further preferably 90 mm or more, further preferably 95 mm or more, further preferably 96 mm or more, further preferably 98 mm or more, and further preferably 99 mm or more.

On the other hand, it is preferably less than 180 mm, more preferably 116 mm or less, further preferably 114 mm or less, further preferably less than 112 mm, further preferably 104 mm or less, and further preferably 101 mm or less.

The specific virtual volume V is preferably 13,000,000 $mm^3$ or more, more preferably 22,706,213 $mm^3$ or more, further preferably 23,338,766 $mm^3$ or more, further preferably 23,576,710 $mm^3$ or more, more preferably 28,585,634 $mm^3$ or more, further preferably 28,719,183 $mm^3$ or more, further preferably 29,000,000 $mm^3$ or more, further preferably 29,087,378 $mm^3$ or more, further preferably 30,132,749 $mm^3$ or more, further preferably 30,495,603 $mm^3$ or more, further preferably 34,138,255 $mm^3$ or more, further preferably 35,836,776 $mm^3$ or more, further preferably 36,000,000 $mm^3$ or more, further preferably 36,203,610 $mm^3$ or more, further preferably 36,418,787 $mm^3$ or more, further preferably 36,616,393 $mm^3$ or more, and further preferably 36,682,357 $mm^3$ or more.

On the other hand, it is preferably less than 66,000,000 $mm^3$, more preferably 52,265,389 $mm^3$ or less, further preferably less than 44,000,000 $mm^3$, further preferably 43,355,989 $mm^3$ or less, further preferably 41,835,961 $mm^3$ or less, further preferably 40,755,756 $mm^3$ or less, and further preferably less than 38,800,000 $mm^3$.

Further, in the present invention, considering the stability of the riding comfort during traveling, ($Dt - 2 \times Ht$) is preferably 450 mm or more, more preferably 456 mm or more, further preferably 458 mm or more, further preferably 470 mm or more, further preferably 480 mm or more, further preferably 482 mm or more, further preferably 483 mm or more, and further preferably 484 mm or more.

On the other hand, considering the deformation of the tread portion, it is preferably less than 560 mm, more preferably 559 mm or less, further preferably 558 mm or less, further preferably 534 mm or less, further preferably 533 mm or less, further preferably less than 530 mm, further preferably less than 510 mm, further preferably less than 509 mm, further preferably 508 mm or less, and further preferably 507 mm or less.

## [3] Embodiment

Hereinafter, the present invention will be specifically described based on the embodiments.

### 1. Rubber composition constituting the belt layer

#### (1) Compounding material

The rubber composition constituting the belt layer of the tire according to the present invention can be obtained from the rubber component and other compounding materials described below.

##### (a) Rubber component

In the present embodiment, as the rubber component, rubber (polymer) generally used for producing tires such as isoprene-based rubber, butadiene rubber (BR), styrene-butadiene rubber (SBR), and nitrile rubber (NBR) can be used. Among these, isoprene-based rubbers are preferred, and BR and SBR may be used in combination as necessary.

##### (a-1) Isoprene rubber

The content (total content) of the isoprene-based rubber in 100 parts by mass of the rubber component is preferably 60 parts by mass or more, more preferably 80 parts by mass or more, and further preferably 90 parts by mass or more.

Examples of the isoprene-based rubber include natural rubber (NR), isoprene rubber (IR), reformed NR, modified NR, and modified IR. Among them, NR is preferable from the viewpoint of excellent strength.

As the NR, for example, SIR20, RSS # 3, TSR20 and the like, which are common in the tire industry, can be used. The IR is not particularly limited, and for example, IR 2200 and the like, which are common in the tire industry, can be used. Reformed NR includes deproteinized natural rubber (DPNR), high-purity natural rubber (UPNR), and the like. Modified NR includes epoxidized natural rubber (ENR), hydrogenated natural rubber (HNR), grafted natural rubber, and the like.

Modified IR includes epoxidized isoprene rubber, hydrogenated isoprene rubber, grafted isoprene rubber, and the like. These may be used alone or in combination of two or more.

(a-2) BR

In the present embodiment, 5 parts by mass or more and 25 parts by mass or less of BR may be used together with NR in the rubber component, if necessary.

The weight average molecular weight of BR is, for example, more than 100,000 and less than 2,000,000. The vinyl bond amount of BR (1,2-bonded butadiene unit content) is, for example, more than 1% by mass and less than 30% by mass. The cis content of BR is, for example, more than 1% by mass and less than 98% by mass. The trans amount of BR is, for example, more than 1% by mass and less than 60% by mass. The cis content can be measured by infrared absorption spectrometry.

BR is not particularly limited, and BR with high cis content (90% or more of cis content), BR with low cis content, BR containing syndiotactic polybutadiene crystals, and the like can be used. BR may be either non-modified BR or modified BR, and modified BR may be, for example, S-modified BR modified with a compound (modifying agent) represented by the following formula.

[Chemical 1]

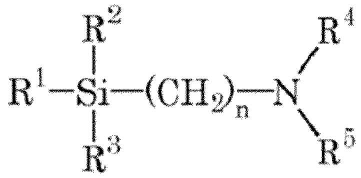

In the formula, $R^1$, $R^2$ and $R^3$ represent, the same or different, alkyl group, alkoxy group, silyloxy group, acetal group, carboxyl group (-COOH), mercapto group (-SH) or derivatives thereof. $R^4$ and $R^5$ represent, the same or different, hydrogen atoms or alkyl groups. $R^4$ and $R^5$ may be combined to form a ring structure with nitrogen atoms. n represents an integer.

Examples of modified BR modified with the compound (modifier) represented by the above formula include BR whose polymer terminal (active terminal) has been modified with the compound represented by the above formula.

As $R^1$, $R^2$ and $R^3$, an alkoxy group is preferable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is preferable. n is preferably 1 to 5, more preferably 2 to 4, and even more preferably 3. Further, when $R^4$ and $R^5$ are bonded to form a ring structure together with a nitrogen atom, a 4- to 8-membered ring is preferable. The alkoxy group also includes a cycloalkoxy group (for example, cyclohexyloxy group) and an aryloxy group (for example, phenoxy group, benzyloxy group).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified BR, a modified SBR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;
amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid

chloride;

epoxy group-containing silane compounds such as 1,3-bis-(glycidyloxypropyl) -tetramethyldisiloxane, and (3-glycidyloxypropyl) - pentamethyldisiloxane;

sulfide group-containing silane compound such as (trimethylsilyl) [3- (trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3- (methyldibutoxysilyl) propyl] sulfide;

N-substituted aziridine compound such as ethyleneimine and propyleneimine;

alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane, and N, N-bis (trimethylsilyl) aminoethyltriethoxysilane;

(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;

benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;

N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;

N- substituted piperidone such as methyl-2-piperidone, N-vinyl-2-piperidone, and N-phenyl-2-piperidone;

N-substituted lactams such as N-methyl -ε-caprolactam, N-phenyl-ε-caprolactum, N-methyl-ω-laurilolactum, N-vinyl-ω-laurilolactum, N-methyl-β-propiolactam, and N-phenyl-β-propiolactam; and

N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone. The modification with the above compound (modifying agent) can be carried out by a known method.

As modified BR, for example, tin-modified BR can also be used. As the tin-modified BR, those which are obtained by polymerizing 1,3-butadiene with a lithium initiator and then adding a tin compound, and in which the ends of the tin-modified BR molecular are bonded by a tin-carbon bond are preferred.

Examples of the lithium initiator include lithium-based compounds such as alkyllithium, aryllithium, vinyllithium, organotinlithium, and organonitrogen lithium compounds, and lithium metal. By using the lithium initiator as an initiator for tin-modified BR, tin-modified BR having a high vinyl content and a low cis content can be produced.

Examples of the tin compounds include tin tetrachloride, butyltin trichloride, dibutyltin dichloride, dioctyltin dichloride, tributyltin chloride, triphenyltin chloride, diphenyldibutyltin, triphenyltin ethoxide, diphenyldimethyltin, ditolyltin chloride, diphenyltin dioctanoate, divinyldiethyltin, tetrabenzyltin, dibutyltin distearate, tetraallyltin, and p-tributyltin styrene.

Content of tin atoms in the tin-modified BR is preferably 50 ppm or more, and more preferably 60 ppm or more. On the other hand, it is preferably 3000 ppm or less, more preferably 2500 ppm or less, and even more preferably 250 ppm or less.

Further, the molecular weight distribution (Mw/Mn) of the tin-modified BR is preferably 2 or less, and more preferably 1.5 or less.

Further, the vinyl bond content in the tin-modified BR is preferably 5% by mass or more, and more preferably 7% by mass or more. On the other hand, the vinyl bond content of tin-modified BR is preferably 50% by mass or less, and more preferably 20% by mass or less.

The above S-modified BR and tin-modified BR may be used alone, or two or more of them may be used in combination.

As BR, for example, products of Ube Industries, Ltd., JSR Corporation, Asahi Kasei Co., Ltd., Nippon Zeon Co., Ltd., etc. can be used.

(a-3) SBR

In the present embodiment, the rubber component may contain 5 to 25 parts by mass of SBR together with NR, if necessary, and may be used in combination with the above BR.

The weight average molecular weight of SBR is, for example, more than 100,000 and less than 2 million. The

styrene content of SBR is, for example, preferably more than 5% by mass, more preferably more than 10% by mass, and even more preferably more than 20% by mass. On the other hand, it is preferably less than 50% by mass, more preferably less than 40% by mass, and even more preferably less than 35% by mass. The vinyl bond amount of SBR is, for example, preferably more than 5% by mass and less than 70% by mass. The structure identification of SBR (measurement of styrene content and vinyl bond amount) can be performed using, for example, an apparatus of the JNM-ECA series manufactured by JEOL Ltd.

The SBR is not particularly limited, and for example, emulsionpolymerized styrene-butadiene rubber (E-SBR), solution-polymerized styrene-butadiene rubber (S-SBR) and the like can be used. The SBR may be either a non-modified SBR or a modified SBR, and these may be used alone or in combination of two or more.

The modified SBR may be any SBR having a functional group that interacts with a filler such as silica. Examples thereof include

end-modified SBR (end-modified SBR having the above functional group at the terminal) in which at least one end of the SBR is modified with a compound having the above functional group (modifying agent),
main chain modified SBR having the functional group in the main chain,
main chain terminal modified SBR having the functional group at the main chain and the terminal (for example, a main chain terminal modified SBR having the above functional group to the main chain and having at least one end modified with the above modifying agent), and
end-modified SBR which is modified (coupled) with a polyfunctional compound having two or more epoxy groups in the molecule, and into which an epoxy group or hydroxyl group has been introduced.

As the SBR, for example, SBR manufactured and sold by Sumitomo Chemical Co., Ltd., JSR Corporation, Asahi Kasei Co., Ltd., Nippon Zeon Corporation, etc. can be used. The SBR may be used alone or in combination of two or more.

(a-4) Other rubber components

Further, as another rubber component, the rubber composition may contain a rubber (polymer) generally used in the production of tires, such as nitrile rubber (NBR), if necessary.

(b) Compounding materials other than rubber components (b-1) Filler

In the present embodiment, the rubber composition preferably contains a filler. Specific examples of the filler include carbon black, silica, calcium carbonate, talc, alumina, clay, aluminum hydroxide, and mica. Among these, carbon black can be preferably used as the reinforcing agent. It is also preferable to use silica as a reinforcing agent, if necessary. In this case, it is preferable to use it in combination with a silane coupling agent.

(i) Carbon black

The rubber composition preferably contains carbon black. The content of carbon black is, for example, preferably 10 parts by mass or more and 100 parts by mass or less, more preferably 40 parts by mass or more and 70 parts by mass or less, and further preferably 50 parts by mass or more and 60 parts by mass or less, with respect to 100 parts by mass of the rubber component.

The carbon black is not particularly limited, and examples thereof includes furnace black (furnace carbon black) such as SAF, ISAF, HAF, MAF, FEF, SRF, GPF, APF, FF, CF, SCF and ECF; acetylene black (acetylene carbon black); thermal black (thermal carbon black) such as FT and MT; and channel black (channel carbon black) such as EPC, MPC and CC; and graphite. These may be used alone or in combination of two or more.

Nitrogen adsorption specific surface area ($N_2SA$) of carbon black is, for example, more than 30 $m^2/g$ and less than 250 $m^2/g$. The amount of dibutyl phthalate (DBP) absorbed by carbon black is, for example, more than 50 ml/100 g and less than 250 ml/100 g. The nitrogen adsorption specific surface area of carbon black is measured according to ASTM D4820-93, and the amount of DBP absorbed is measured according to ASTM D2414-93.

The specific carbon black is not particularly limited, and examples thereof include N134, N110, N220, N234, N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used alone or in combination of two or more.

(ii) Silica

The rubber composition preferably further contains silica, if necessary. The BET specific surface area of the silica

is preferably more than 140 $m^2/g$, more preferably more than 160 $m^2/g$, from the viewpoint of obtaining good durability performance. On the other hand, from the viewpoint of obtaining good rolling resistance at high-speed running, it is preferably less than 250 $m^2/g$, and more preferably less than 220 $m^2/g$.

Moreover, the content of the silica with respect to 100 parts by mass of the rubber component is preferably 3 parts by mass or more and more preferably 5 parts by mass or more, when the silane coupling agent is not used in combination. On the other hand, it is preferably 25 parts by mass or less and more preferably 15 parts by mass or less. When performing combined use with a silane coupling agent, it is preferably 25 mass parts or more. On the other hand, it is preferably 50 parts by mass or less, more preferably 40 parts by mass or less, and further preferably 30 parts by mass or less. The BET specific surface area mentioned above is the value of $N_2SA$ measured by the BET method according to ASTM D3037-93.

Examples of silica include dry silica (anhydrous silica) and wet silica (hydrous silica). Among them, wet silica is preferable because it has large number of silanol groups.

As the silica, for example, products of Degussa, Rhodia, Tosoh Silica Co., Ltd., Solvay Japan Co., Ltd., Tokuyama Corporation, etc. can be used.

(iii) Silane coupling agent

As described above, when using silica, a silane coupling agent can be used together with silica. The silane coupling agent is not particularly limited. Examples of the silane coupling agent include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl) disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;

mercapto-based ones such as 3-mercaptopropyltrimethoxysilane, 2-mercaptoethyltriethoxysilane, and NXT and NXT-Z manufactured by Momentive;

vinyl-based ones such as vinyl triethoxysilane, and vinyl trimethoxysilane;

amino-based ones such as 3-aminopropyltriethoxysilane and 3-aminopropyltrimethoxysilane;

glycidoxy-based ones such as γ-glycidoxypropyltriethoxysilane and γ-glycidoxypropyltrimethoxysilane;

nitro-based ones such as 3-nitropropyltrimethoxysilane, and 3-nitropropyltriethoxysilane; and

chloro-based ones such as 3-chloropropyltrimethoxysilane and 3-chloropropyltriethoxysilane. These may be used alone or in combination of two or more.

As the silane coupling agent, for example, products of Degussa, Momentive, Shinetsu Silicone Co., Ltd., Tokyo Chemical Industry Co., Ltd., Azumax Co., Ltd., Toray Dow Corning Co., Ltd., etc. can be used.

The content of the silane coupling agent is, for example, more than 3 parts by mass and less than 15 parts by mass, with respect to 100 parts by mass of silica.

(iv) Other fillers

The rubber composition may further contain fillers such as calcium carbonate, talc, alumina, clay, aluminum hydroxide, and mica, which are generally used in the tire industry, in addition to the above-mentioned carbon black and silica. These contents are, for example, more than 0.1 part by mass and less than 200 parts by mass with respect to 100 parts by mass of the rubber component.

(b-2) Curable resin component

The rubber composition preferably contains a curable resin component such as modified resorcin resin and modified phenol resin. This makes it possible to improve the adhesion to steel cords without greatly deteriorating heat generation and elongation at break.

The content of the curable resin component is, for example, preferably 1 part by mass or more, more preferably 2 parts by mass or more, and even more preferably 3 parts by mass or more, with respect to 100 parts by mass of the rubber component. On the other hand, it is preferably 10 parts by mass or less, more preferably 8 parts by mass or less, and even more preferably 5 parts by mass or less.

Examples of specific modified resorcin resins include Sumikanol 620 (modified resorcin resin) manufactured by Taoka Chemical Co., Ltd.; and examples of modified phenol resins include PR12686 (cashew oil-modified phenolic resin)

manufactured by Sumitomo Bakelite Co., Ltd.

When using the modified resorcinol resin, it is preferable to contain a methylene donor as a curing agent. Examples of methylene donors include hexamethylenetetramine (HMT), hexamethoxymethylolmelamine (HMMM) and hexamethylolmelamine pentamethyl ether (HMMPME). It is preferable to contain 5 parts by mass or more and about 15 parts by mass.

As a specific methylene donor, for example, Sumikanol 507 manufactured by Taoka Chemical Co., Ltd. can be used.

(b-3) Resin component

Further, from the viewpoint of workability (imparting tackiness), the rubber composition preferably contains a resin component, if necessary. The resin component may be solid or liquid at room temperature, and specific resin components include rosin-based resin, styrene resin, coumarone resin, terpene resin, C5 resin, C9 resin, C5C9 resin, acrylic resin, and the like. Two or more kinds of the resin components may be used in combination. The content of the resin component is preferably more than 2 parts by mass and less than 45 parts by mass with respect to 100 parts by mass of the rubber component, and is more preferably less than 30 parts by mass.

A rosin-based resin is a resin whose main component is rosin acid obtained by processing rosin. The rosin-based resins (rosins) can be classified according to the presence or absence of modification, and can be classified into unmodified rosin (native rosin) and modified rosin (rosin derivative). Examples of the unmodified rosins include tall rosins (also known as tall oil rosins), gum rosins, wood rosins, disproportionated rosins, polymerized rosins, hydrogenated rosins, and other chemically modified rosins. The modified rosin is a modified unmodified rosin, and examples thereof include rosin esters, unsaturated carboxylic acid-modified rosins, unsaturated carboxylic acid-modified rosin esters, rosin amide compounds, and rosin amine salts.

The styrene resin is a polymer using a styrene monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more styrene monomers, and, in addition, copolymers obtained by copolymerizing a styrene monomer and other monomers that can be copolymerized with the styrene monomer.

Examples of the other monomers include acrylonitriles such as acrylonitrile and methacrylate; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; α, β-unsaturated carboxylic acids such as maleic anhydride and acid anhydrides thereof.

As the coumarone-based resin, coumarone-indene resin is preferable. Coumarone-indene resin is a resin containing coumarone and indene as monomer components constituting the skeleton (main chain) of the resin. Examples of the monomer component contained in the skeleton other than coumarone and indene include styrene, α-methylstyrene, methylindene, and vinyltoluene.

The content of the coumarone-indene resin is, for example, more than 1.0 part by mass and less than 50.0 parts by mass with respect to 100 parts by mass of the rubber component.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Examples of the terpene resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)_n$ or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as hydrogenated terpene resin obtained by hydrogenating the terpene resin. Examples of the terpene phenol include a resin obtained by copolymerizing the above-mentioned terpene compound and the phenol compound, and a resin obtained by hydrogenating above-mentioned resin. Specifically, a resin obtained by condensing the above-mentioned terpene

compound, the phenol compound and the formalin can be mentioned. Examples of the phenol compound include phenol, bisphenol A, cresol, and xylenol. Examples of the aromatic-modified terpene resin include a resin obtained by modifying a terpene resin with an aromatic compound, and a resin obtained by hydrogenating above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumarone, and indene.

The C5 resin refers to a resin obtained by polymerizing a C5 fraction. Examples of the C5 fraction include petroleum fractions having 4 to 5 carbon atoms such as cyclopentadiene, pentene, pentadiene, and isoprene. As the C5-based petroleum resin, a dicyclopentadiene resin (DCPD resin) is preferably used.

The C9 resin refers to a resin obtained by polymerizing a C9 fraction, and may be hydrogenated or modified. Examples of the C9 fraction include petroleum fractions having 8 to 10 carbon atoms such as vinyltoluene, alkylstyrene, indene, and methyl indene. As the specific examples, a coumarone-indene resin, a coumarone resin, an indene resin, and an aromatic vinyl resin are preferably used. As the aromatic vinyl resin, a homopolymer of $\alpha$-methylstyrene or styrene or a copolymer of $\alpha$-methylstyrene and styrene is preferable because it is economical, easy to process, and excellent in heat generation. A copolymer of $\alpha$-methylstyrene and styrene is more preferred. As the aromatic vinyl-based resin, for example, those commercially available from Clayton, Eastman Chemical, etc. can be used.

The C5C9 resin refers to a resin obtained by copolymerizing the C5 fraction and the C9 fraction, and may be hydrogenated or modified. Examples of the C5 fraction and the C9 fraction include the above-mentioned petroleum fraction. As the C5C9 resin, for example, those commercially available from Tosoh Corporation, LUHUA, etc. can be used.

The acrylic resin is not particularly limited, but for example, a solvent-free acrylic resin can be used.

As the solvent-free acrylic resin, a (meth) acrylic resin (polymer) synthesized by a high-temperature continuous polymerization method (high-temperature continuous lump polymerization method: a method described in US 4414370 B, JP 84-6207 A, JP 93-58805 A, JP 89-313522 A, US 5010166 B, Toa Synthetic Research Annual Report TREND2000 No. 3 p42-45, and the like) without using polymerization initiators, chain transfer agents, organic solvents, etc. as auxiliary raw materials as much as possible, can be mentioned. In the present invention, (meth) acrylic means methacrylic and acrylic.

Examples of the monomer component constituting the acrylic resin include (meth) acrylic acid, and (meth) acrylic acid derivatives such as (meth) acrylic acid ester (alkyl ester, aryl ester, aralkyl ester, etc.), (meth) acrylamide, and (meth) acrylamide derivative.

In addition, as the monomer component constituting the acrylic resin, aromatic vinyl compounds such as styrene, $\alpha$-methylstyrene, vinyltoluene, vinylnaphthalene, divinylbenzene, trivinylbenzene, divinylnaphthalene, and the like may be used, together with (meth) acrylic acid or (meth) acrylic acid derivative.

The acrylic resin may be a resin composed of only a (meth) acrylic component or a resin also having a component other than the (meth) acrylic component. Further, the acrylic resin may have a hydroxyl group, a carboxyl group, a silanol group, or the like.

As the resin component, for example, a product of Maruzen Petrochemical Co., Ltd., Sumitomo Bakelite Co., Ltd., Yasuhara Chemical Co., Ltd., Toso Co., Ltd., Rutgers Chemicals Co., Ltd., BASF Co., Ltd., Arizona Chemical Co., Ltd., Nitto Chemical Co., Ltd., Co., Ltd., Nippon Catalyst Co., Ltd., JX Energy Co., Ltd., Arakawa Chemical Industry Co., Ltd., Taoka Chemical Industry Co., Ltd. can be used.

(b-4) Organic acid cobalt

The rubber composition preferably contains organic acid cobalt. Since the organic acid cobalt plays a role of cross-linking the cord and the rubber, the adhesion between the cord and the rubber can be improved by containing this component. The content of the organic acid cobalt is preferably 500 ppm or more, more preferably 700 ppm or more, and even more preferably 900 ppm or more as the cobalt concentration in the rubber composition. On the other hand, it is preferably 1500 ppm or less, and more preferably 1300 ppm or less.

Examples of organic acid cobalt include cobalt stearate, cobalt naphthenate, cobalt neodecanoate, and cobalt boron-3 neodecanoate.

(b-5) Anti-reversion agent (Anti-vulcanization reversion agent)

The rubber composition preferably contains an anti-reversion agent (anti-vulcanization reversion agent), if necessary. This suppresses reversion and improves durability. The content of the anti-reversion agent is preferably 0.1 parts by mass or more and 3 parts by mass or less, more preferably 0.2 parts by mass or more and 2.5 parts by mass or less, and further preferably 0.3 parts by mass or more and 2 parts by mass or less, with respect to 100 parts by mass of the rubber component. As a specific anti-reversion agent, for example, Parkalink 900 (1,3-bis(citraconimidomethyl)benzene)

manufactured by Flexis can be used.

(b-6) Anti-aging agent

The rubber composition preferably contains an anti-aging agent. Content of the anti-aging agent is, for example, more than 1 part by mass and less than 10 parts by mass, and more preferably 1.5 parts by mass or more, with respect to 100 parts by mass of the rubber component.

Examples of the antiaging agent include naphthylamine-based antiaging agents such as phenyl-α-naphthylamine; diphenylamine-based antiaging agents such as octylated diphenylamine and 4,4'-bis (α, α'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, styrenated phenol; bis, tris, polyphenolic anti-aging agents such as tetrakis-[methylene-3-(3',5'-di-t-butyl-4'-hydroxyphenyl)propionate] methane. These may be used alone or in combination of two or more.

As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

(b-7) Stearic acid

The rubber composition may contain stearic acid. Content of stearic acid is, for example, more than 0.5 parts by mass and less than 10.0 parts by mass, and more preferably 1 parts by mass or more, with respect to 100 parts by mass of the rubber component. As the stearic acid, conventionally known ones can be used, and, for example, products of NOF Corporation, NOF Corporation, Kao Corporation, Fuji film Wako Pure Chemical Industries, Ltd., and Chiba Fatty Acid Co., Ltd., etc. can be used.

(b-8) Zinc oxide

The rubber composition may contain zinc oxide. Content of zinc oxide is, for example, more than 0.5 parts by mass and less than 15 parts by mass, more preferably 10 parts by mass or more, and further preferably 11 parts by mass or more, with respect to 100 parts by mass of the rubber component. As the zinc oxide, conventionally known ones can be used, for example, products of Mitsui Metal Mining Co., Ltd., Toho Zinc Co., Ltd., Hakusui Tech Co., Ltd., Shodo Chemical Industry Co., Ltd., Sakai Chemical Industry Co., Ltd., etc. can be used.

(b-9) Crosslinking agent and vulcanization accelerator

The rubber composition preferably contains a cross-linking agent such as sulfur. Content of the cross-linking agent is, for example, more than 0.1 part by mass and less than 10.0 parts by mass, and more preferably 7 parts by mass or more, with respect to 100 parts by mass of the rubber component.

Examples of sulfur include powdered sulfur, precipitated sulfur, colloidal sulfur, insoluble sulfur, highly dispersible sulfur, and soluble sulfur, which are commonly used in the rubber industry. These may be used alone or in combination of two or more.

As the sulfur, for example, products of Tsurumi Chemical Industry Co., Ltd., Karuizawa Sulfur Co., Ltd., Shikoku Chemicals Corporation, Flexsys Co., Ltd., Nippon Kanryu Kogyo Co., Ltd., Hosoi Chemical Industry Co., Ltd., etc. can be used.

Examples of the cross-linking agent other than sulfur include vulcanizing agents containing a sulfur atom such as Tackirol V200 manufactured by Taoka Chemical Industry Co., Ltd., DURALINK HTS (1,6-hexametylene-sodium dithiosulfate dihydrate) manufactured by Flexsys, and KA9188 (1,6-bis (N, N'-dibenzylthiocarbamoyldithio) hexane) manufactured by Lanxess; and organic peroxides such as dicumylperoxide.

The rubber composition preferably contains a vulcanization accelerator. Content of the vulcanization accelerator is, for example, more than 0.3 parts by mass and less than 10.0 parts by mass, and more preferably 1.2 parts by mass or more, with respect to 100 parts by mass of the rubber component.

Examples of the vulcanization accelerator include

thiazole-based vulcanization accelerators such as 2-mercaptobenzothiazole, di-2-benzothiazolyl disulfide, and N-cyclohexyl-2-benzothiadylsulfenamide;
thiuram-based vulcanization accelerators such as tetramethylthiuram disulfide (TMTD), tetrabenzyltiuram disulfide (TBzTD), and tetrakis (2-ethylhexyl) thiuram disulfide (TOT-N);
sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, N-oxyethylene-2-benzothiazolesulfenamide, and N, N'-diisopropyl-2-benzothiazolesulfenamide; and guanidine-based vulcanization accelerators such as diphenylguanidine, di-ortho-tolylguanidine and ortho-tolylbiguanidine. These may be used alone or in combination of two or more.

(b-10) Other

In addition to the above components, the rubber composition may further contain additives generally used in the tire industry, such as fatty acid metal salts, carboxylic acid metal salts, and organic peroxides. Content of these additives is, for example, more than 0.1 part by mass and less than 200 parts by mass with respect to 100 parts by mass of the rubber component.

(2) Production of tread rubber composition

The rubber composition is produced by a general method, for example, a manufacturing method including a base kneading step of kneading a rubber component with a filler such as carbon black, and a finish kneading step of kneading the kneaded product obtained in the base kneading step and a cross-linking agent.

The kneading can be performed using a known (sealed) kneader such as a banbury mixer, a kneader, or an open roll.

The kneading temperature of the base kneading step is, for example, higher than 50 °C and lower than 200 °C, and the kneading time is, for example, more than 30 seconds and less than 30 minutes. In the base kneading process, in addition to the above components, compounding agents conventionally used in the rubber industry, such as softeners such as oil, stearic acid, zinc oxide, antiaging agents, waxes, and vulcanization accelerators, may be appropriately added and kneaded as needed.

In the finish kneading step, the kneaded product obtained in the base kneading step and the cross-linking agent are kneaded. The kneading temperature of the finish kneading step is, for example, above room temperature and lower than 80 °C, and the kneading time is, for example, more than 1 minute and less than 15 minutes. In the finish kneading step, in addition to the above components, a vulcanization accelerator, zinc oxide and the like may be appropriately added and kneaded as needed.

2. Manufacture of belt members

A belt member can be manufactured by topping the obtained rubber composition on the upper and lower sides of steel cords arranged in parallel.

3. Tire manufacturing

The tire of the present invention is manufactured by a usual method using an unvulcanized rubber composition obtained through the finish kneading step. That is, first, an unvulcanized tire is produced by molding the belt member obtained above together with other tire members on a tire molding machine by a normal method.

Specifically, on the molded drum, the inner liner as a member to ensure the air-tightness of the tire, the carcass as a member to withstand the load, impact and filling air pressure received by the tire, a belt member as a member to strongly tighten the carcass to increase the rigidity of the tread, and the like are wound, both ends of the carcass are fixed to both side edges, a bead part as a member for fixing the tire to the rim is arranged, and they are formed into a toroid shape. Then the tread is pasted on the center of the outer circumference and the sidewall is pasted on the radial outer side to produce an unvulcanized tire.

In the present embodiment, it is preferable that the steel cords in the belt layer are arranged at an angle of 15° or more with respect to the tire circumferential direction from the viewpoint of increasing the binding force during running and making it easier to suppress the growth of the outer diameter. The angle is more preferably 18° or more, and even more preferably 23° or more. On the other hand, when the angle is too large, the movement during turning becomes too large. Therefore, the angle is preferably 50° or less, more preferably 45° or less, and even more preferably 35° or less.

The angle of the steel cord is the angle of the steel cord with respect to the tire circumferential direction when the tire is not filled with air, and can be confirmed by peeling off the tread portion from the radially outer side of the tire.

Then, the produced unvulcanized tire is heated and pressed in a vulcanizer to obtain a tire. The vulcanization step can be carried out by applying a known vulcanization means. The vulcanization temperature is, for example, higher than 120 °C and lower than 200 °C, and the vulcanization time is, for example, more than 5 minutes and less than 15 minutes.

At this time, the tire is formed into a shape that satisfies the above-mentioned (formula 1) and (formula 4), when the tire is installed on a standardized rim and the internal pressure is set to 250 kPa.

In the present embodiment, the tires that can satisfy (formula 1) and (formula 4) are preferably applied to pneumatic tires for passenger cars, and satisfying the above formulas can contribute more favorably to solve the problem of providing a pneumatic tire that not only sufficiently reduces the rolling resistance at high-speed running but also sufficiently improves the change in handling performance at low speed and high speed and the durability.

[EXAMPLES]

Hereinafter, the present invention will be described in more specific with reference to Examples.

[Experiment 1]

In this experiment, 175 size tires were prepared and evaluated.

1. Manufacture of rubber compositions for belts

First, a rubber composition for belt was produced.

(1) Compounding material

First, each compounding material shown below was prepared.

(a) Rubber component
NR: RSS3
(b) Compounding materials other than rubber components

(b-1) Carbon Black-1: Show Black N326 manufactured by Cabot Japan Co., Ltd. ($N_2SA$: 78$m^2$/g)
(b-2) Carbon Black-2: Show Black N550 manufactured by Cabot Japan Co., Ltd. ($N_2SA$: 42$m^2$/g)
(b-3) Curable resin component-1: PR12686 manufactured by Sumitomo Bakelite Co., Ltd. (Cashew oil-modified phenolic resin)
(b-4) Curable resin component-2: Sumikanol 620 manufactured by Taoka Chemical Co., Ltd. (Modified resorcinol resin)
(b-5) Curing agent: Sumikanol 507 manufactured by Taoka Chemical Co., Ltd. (Methylene donor)
(b-6) Cobalt organic acid: DICNATE NBC-2 manufactured by DIC Corporation (Boron cobalt neodecanoate, cobalt content 22.5% by mass)
(b-7) Zinc oxide: Zinc oxide No. 1 manufactured by Mitsui Mining & Smelting Co., Ltd.
(b-8) Anti-aging agent-1: Nocrac 6C manufactured by Ouchi Shinko Chemical Industry Co., Ltd. (N-phenyl-N'-(1,3-dimethylbutyl)-p-phenylenediamine)
(b-9) Anti-aging agent -2: Antage RD manufactured by Kawaguchi Chemical Industry Co., Ltd. (2,2,4-trimethyl-1,2-dihydroquinoline)
(b-10) Stearic acid: Stearic acid "Tsubaki" manufactured by NOF Corporation
(b-11) Cross-linking agent, vulcanization accelerator, cross-linking aid

Sulfur: powdered sulfur manufactured by Tsurumi Chemical Industry Co., Ltd.
Vulcanization accelerator: Noxceler DZ manufactured by Ouchi Shinko Kagaku Kogyo Co., Ltd. (N,N-dicyclohexyl-2-benzothiazolylsulfenamide)
Crosslinking aid: Duralink HTS manufactured by Flexis

(2) Production of rubber composition

In accordance with the formulation shown in Table 1 and Table 2, materials other than sulfur and the vulcanization accelerator were kneaded under the conditions of 150 °C for 5 minutes using a banbury mixer to obtain a kneaded product. Each compounding amount is a mass part.
Next, sulfur and a vulcanization accelerator were added to the obtained kneaded product, and the mixture was kneaded at 80°C for 5 minutes using an open roll to obtain a rubber composition for belt.

2. Tire manufacturing

Two-twisted steel cords with a filament diameter of 0.3 mm were pulled out and arranged so that 42 cords per 5 cm

are arranged. The obtained rubber composition for belt was topped on the upper and lower sides of steel cords so that the total thickness becomes 0.95mm. Then, after vulcanization, a belt member was obtained by cutting out so that the steel cord was at an angle of 24° to the tire circumferential direction.

After that, together with other tire members, two layers of the belt member were laminated so as to cross each other to form an unvulcanized tire, and press vulcanization was performed under the conditions of 170 °C for 10 minutes to produce each test tire having a size of 175 type (Example 1-1 to Example 1-5 and Comparative Example 1-1 to Comparative Example 1-5).

In each test tire, the above-mentioned ($L_{80}/L_0$) was set to 0.5, the total cross-sectional area of the circumferential groove was set to 22% of the cross-sectional area of the tread portion, and the total volume of the lateral grooves including the lateral grooves having the groove width/groove depth of 0. 65 was set to 3.5% of the volume of the tread portion.

3. Parameter calculation

After that, the outer diameter Dt (mm), the cross-sectional width Wt (mm), the cross-sectional height Ht (mm), the aspect ratio (%), and the distance T (mm) from the tread surface to the belt layer of each test tire were obtained, and the virtual volume V ($mm^3$) was obtained. At the same time, rubber was cut out from between the belt layers of each test tire to prepare a rubber test piece for viscoelasticity measurement with a length of 40 mm and a width of 4 mm. For each rubber test piece, using an Eplexor series manufactured by GABO Co., Ltd, tan δ and E* were measured under the conditions of 70°C, frequency of 10 Hz, initial strain of 5%, and dynamic strain of 1%, and (tan δ/E*) was calculated. The results are shown in Tables 1 and 2.

Then, (Dt-2 × Ht), ($Dt^2 \times \pi / 4$) / Wt, (V+1.5 × $10^7$)/Wt, (V+2.0 × $10^7$) / Wt, (V+2.5 × $10^7$)/Wt, [(tan δ/E*)/Wt]×1000, and (tan δ/E*)×T were calculated. The results are shown in Tables 1 and 2.

4. Performance evaluation test

(1) Evaluation of steering stability

Each test tire is installed on all wheels of a vehicle (domestic FF vehicle, displacement 2000cc). After filling air so that the internal pressure is 250kPa, and running on a dry road test course at 40km/h and 120km/h, the change in handling performance due to changes in running speed was evaluated sensorily by the driver on a 5-point scale from 1 (feeling a significant change) to 5 (feeling almost no change). Then, the total points of the evaluations by the 20 drivers were calculated.

Then, taking the result in Comparative Example 1-4 as 100, the results of each test tire were indexed based on the following formula to evaluate steering stability. A larger value indicates better steering stability.

$$\text{Steering stability} = [(\text{Result of test tire}) / (\text{Result of Comparative Example 1-4})] \times 100$$

(2) Evaluation of durability performance

After installing each test tire on all wheels of the vehicle (domestic FF vehicle, displacement 2000cc) and filling it with air so that the internal pressure becomes 250kPa, a driving 10 laps at a speed of 50 km/h, followed by climbing onto the unevenness provided on the road surface at a speed of 80 km/h was repeated on the test course on a dry road surface in an overloaded state. Thereafter, the lap was performed again at a speed of 50 km/h and then the speed was gradually increased to measure the speed at the time when the driver felt an abnormality.

Next, taking the result in Comparative Example 1-5 as 100, and the durability performance was relatively evaluated by indexing based on the following formula. The larger the value, the better the durability.

$$\text{Durability performance} = [(\text{Result of test tire}) / (\text{Result of Comparative Example 1-5})] \times 100$$

[0173]

(3) Comprehensive evaluation

The evaluation results of (1) and (2) above were totaled to obtain a comprehensive evaluation.

(4) Evaluation result

The results of each evaluation are shown in Tables 1 and 2.

[Table 1]

| | Example No. | | | | |
|---|---|---|---|---|---|
| | 1-1 | 1-2 | 1-3 | 1-4 | 1-5 |
| SIZE | 175/40R21 | 175/40R21 | 175/40R21 | 175/50R20 | 175/60R19 |
| (Formulation) | | | | | |
| NR | 100 | 100 | 100 | 100 | 100 |
| Carbon black-1 | 55 | 55 | | 55 | 55 |
| Carbon black-2 | | | 55 | | |
| Crosslinking aid | 0.5 | 1.2 | 1.2 | 0.5 | 0.5 |
| Curable resin component-1 | 3 | | | 3 | 3 |
| Curable resin component-2 | | 5 | 5 | | |
| Cobalt organic acid | 1.0 | 1.0 | 1.0 | 1.0 | 1.0 |
| Zinc oxide | 10 | 11 | 11 | 10 | 10 |
| Anti-aging agent-1 | 1 | 1 | 1 | 1 | 1 |
| Anti-aging agent-2 | 0.5 | 0.5 | 0.5 | 0.5 | 0.5 |
| Stearic acid | 1 | 1 | 1 | 1 | 1 |
| Sulfur | 7 | 7 | 7 | 7 | 7 |
| Curing agent | 1.5 | 3 | 3 | 1.5 | 1.5 |
| Vulcanization accelerator | 1.2 | 1.2 | 1.2 | 1.2 | 1.2 |
| (Parameter) | | | | | |
| tan $\delta$ | 0.13 | 0.1 | 0.08 | 0.13 | 0.13 |
| E* (MPa) | 9.4 | 10.5 | 8.7 | 9.4 | 9.4 |
| Dt(mm) | 671 | 673 | 675 | 685 | 691 |
| V($mm^3$) | 22706213 | 23338766 | 23576710 | 30495603 | 34138255 |
| Wt(mm) | 174 | 176 | 175 | 183 | 178 |
| Ht(mm) | 69 | 70 | 71 | 89 | 104 |
| T (mm) | 8.4 | 8.3 | 8.4 | 8.5 | 8.3 |
| Dt-2$\times$Ht(mm) | 533 | 533 | 533 | 507 | 483 |
| tan $\delta$/E* | 0.01383 | 0.00952 | 0.00920 | 0.01383 | 0.01383 |
| ($Dt^2\times\pi/4$)/Wt | 2032 | 2021 | 2045 | 2014 | 2107 |
| (V+1.5$\times 10^7$)Mt | 216702 | 217834 | 220438 | 248610 | 276058 |
| (V+2.0$\times 10^7$)/Wt | 245438 | 246243 | 249010 | 275932 | 304147 |
| (V+2.5$\times 10^7$)/Wt | 274174 | 274652 | 277581 | 303255 | 332237 |
| Aspect ratio (%) | 40 | 40 | 41 | 49 | 58 |
| [(tan $\delta$/E*)/Wt] $\times$1000 | 0.079 | 0.054 | 0.053 | 0.076 | 0.078 |

(continued)

| (Parameter) | | | | | |
|---|---|---|---|---|---|
| (tan δ/E*) × T | 0.116 | 0.079 | 0.077 | 0.118 | 0.115 |
| (Evaluation result) | | | | | |
| Steering stability | 115 | 118 | 120 | 110 | 118 |
| Durability | 117 | 122 | 135 | 115 | 112 |
| Comprehensive evaluation | 232 | 240 | 255 | 225 | 230 |

[Table 2]

| | Comparative example No. | | | | |
|---|---|---|---|---|---|
| | 1-1 | 1-2 | 1-3 | 1-4 | 1-5 |
| SIZE | 175/80R14 | 175/60R19 | 175/80R14 | 175/80R14 | 175/80R14 |
| (Formulation) | | | | | |
| NR | 100 | 100 | 100 | 100 | 100 |
| Carbon black-1 | 65 | 65 | 55 | 55 | |
| Carbon black-2 | | | | | 55 |
| Crosslinking aid | | | 0.5 | 1.2 | 1.2 |
| Curable resin component-1 | | | 3 | | |
| Curable resin component-2 | | | | 5 | 5 |
| Cobalt organic acid | 1.0 | 1.0 | 1.0 | 1.0 | 1.0 |
| Zinc oxide | 10 | 10 | 10 | 11 | 11 |
| Anti-aging agent-1 | 1 | 1 | 1 | 1 | 1 |
| Anti-aging agent-2 | 0.5 | 0.5 | 0.5 | 0.5 | 0.5 |
| Stearic acid | 1 | 1 | 1 | 1 | 1 |
| Sulfur | 6.5 | 6.5 | 7 | 7 | 7 |
| Curing agent | | | 1.5 | 3 | 3 |
| Vulcanization accelerator | 1.2 | 1.2 | 1.2 | 1.2 | 1.2 |
| (Parameter) | | | | | |
| tan δ | 0.13 | 0.13 | 0.13 | 0.1 | 0.08 |
| E* (MPa) | 6.5 | 6.5 | 9.4 | 10.5 | 8.7 |
| Dt(mm) | 635 | 693 | 636 | 637 | 634 |
| V($mm^3$) | 38535090 | 34331262 | 38831091 | 38669035 | 37827524 |
| Wt(mm) | 177 | 177 | 178 | 176 | 175 |
| Ht(mm) | 140 | 105 | 140 | 141 | 139 |
| T (mm) | 8.5 | 8.3 | 8.4 | 8.5 | 8.3 |
| Dt-2×Ht(mm) | 355 | 483 | 356 | 355 | 356 |
| tan δ/E* | 0.02000 | 0.02000 | 0.01383 | 0.00952 | 0.00920 |
| ($Dt^2$×π/4)/Wt | 1789 | 2131 | 1785 | 1811 | 1804 |
| (V+1.5×$10^7$)/Wt | 302458 | 278708 | 302422 | 304938 | 301872 |
| (V+2.0×$10^7$)/Wt | 330707 | 306956 | 330512 | 333347 | 330443 |
| (V+2.5×$10^7$)Mt | 358955 | 335205 | 358602 | 361756 | 359014 |

(continued)

| | | | | | |
|---|---|---|---|---|---|
| (Parameter) | | | | | |
| Aspect ratio (%) | 79 | 59 | 79 | 80 | 79 |
| [(tan δ/E*)/Wt] ×1000 | 0.113 | 0.113 | 0.078 | 0.054 | 0.053 |
| (tan δ/E*) × T | 0.170 | 0.166 | 0.116 | 0.081 | 0.076 |
| (Evaluation result) | | | | | |
| Steering stability | 93 | 92 | 95 | 100 | 92 |
| Durability | 85 | 90 | 91 | 94 | 100 |
| Comprehensive evaluation | 178 | 182 | 186 | 194 | 192 |

[Experiment 2]

In this experiment, 195 size tires were prepared and evaluated.

After producing the test tires of Examples 2-1 to 2-5 and Comparative Examples 2-1 to 2-5 shown in Tables 3 and 4 in the same manner as in Experiment 1, each parameter was calculated by performing the same procedure. Then, in the same manner, a performance evaluation test was conducted and evaluated. The steering stability was evaluated with the result of Comparative Example 2-4 being set as 100, and the durability performance was evaluated with the result of Comparative Example 2-5 being set as 100. The results of each evaluation are shown in Tables 3 and 4.

[Table 3]

| | Example No. | | | | |
|---|---|---|---|---|---|
| | 2-1 | 2-2 | 2-3 | 2-4 | 2-5 |
| SIZE | 195/40R20 | 195/40R20 | 195/40R20 | 195/50RI9 | 195/60R18 |
| (Formulation) | | | | | |
| NR | 100 | 100 | 100 | 100 | 100 |
| Carbon black-1 | 55 | 55 | | 55 | 55 |
| Carbon black-2 | | | 55 | | |
| Crosslinking aid | 0.5 | 1.2 | 1.2 | 0.5 | 0.5 |
| Curable resin component-1 | 3 | | | 3 | 3 |
| Curable resin component-2 | | 5 | 5 | | |
| Cobalt organic acid | 1.0 | 1.0 | 1.0 | 1.0 | 1.0 |
| Zinc oxide | 10 | 11 | 11 | 10 | 10 |
| Anti-aging agent-1 | 1 | 1 | 1 | 1 | 1 |
| Anti-aging agent-2 | 0.5 | 0.5 | 0.5 | 0.5 | 0.5 |
| Stearic acid | 1 | 1 | 1 | 1 | 1 |
| Sulfur | 7 | 7 | 7 | 7 | 7 |
| Curing agent | 1.5 | 3 | 3 | 1.5 | 1.5 |
| Vulcanization accelerator | 1.2 | 1.2 | 1.2 | 1.2 | 1.2 |
| (Parameter) | | | | | |
| tan δ | 0.13 | 0.1 | 0.08 | 0.13 | 0.13 |
| E* (MPa) | 9.4 | 10.5 | 8.7 | 9.4 | 9.4 |
| Dt(mm) | 664 | 662 | 665 | 680 | 690 |
| V($mm^3$) | 28719183 | 28585634 | 29087378 | 36682357 | 41835961 |
| Wt(mm) | 200 | 202 | 200 | 203 | 200 |

(continued)

| (Parameter) | | | | | |
|---|---|---|---|---|---|
| Ht(mm) | 78 | 77 | 79 | 99 | 116 |
| T (mm) | 9.1 | 9.0 | 9.2 | 9.1 | 9.1 |
| Dt-2×Ht(mm) | 508 | 508 | 507 | 482 | 458 |
| tan δ/E* | 0.01383 | 0.00952 | 0.00920 | 0.01383 | 0.01383 |
| $(Dt^2 \times \pi/4)/Wt$ | 1731 | 1704 | 1737 | 1789 | 1870 |
| $(V+1.5\times10^7)/Wt$ | 218596 | 215770 | 220437 | 254593 | 284180 |
| $(V+2.0\times10^7)/Wt$ | 243596 | 240523 | 245437 | 279223 | 309180 |
| $(V+2.5\times10^7)/Wt$ | 268596 | 265275 | 270437 | 303854 | 334180 |
| Aspect ratio (%) | 39 | 38 | 40 | 49 | 58 |
| [(tan δ/E*)/Wt] ×1000 | 0.069 | 0.047 | 0.046 | 0.068 | 0.069 |
| (tan δ/E*) × T | 0.126 | 0.086 | 0.085 | 0.126 | 0.126 |
| (Evaluation result) | | | | | |
| Steering stability | 116 | 123 | 126 | 115 | 119 |
| Durability | 110 | 115 | 126 | 114 | 110 |
| Comprehensive evaluation | 226 | 238 | 252 | 229 | 229 |

[Table 4]

| | Comparative example No. | | | | |
|---|---|---|---|---|---|
| | 2-1 | 2-2 | 2-3 | 2-4 | 2-5 |
| SIZE | 195/65R17 | 195/40R20 | 195/65R17 | 195/65R17 | 195/65R17 |
| (Formulation) | | | | | |
| NR | 100 | 100 | 100 | 100 | 100 |
| Carbon black-1 | 65 | 65 | 55 | 55 | |
| Carbon black-2 | | | | | 55 |
| Crosslinking aid | | | 0.5 | 1.2 | 1.2 |
| Curable resin component-1 | | | 3 | | |
| Curable resin component-2 | | | | 5 | 5 |
| Cobalt organic acid | 1.0 | 1.0 | 1.0 | 1.0 | 1.0 |
| Zinc oxide | 10 | 10 | 10 | 11 | 11 |
| Anti-aging agent-1 | 1 | 1 | 1 | 1 | 1 |
| Anti-aging agent-2 | 0.5 | 0.5 | 0.5 | 0.5 | 0.5 |
| Stearic acid | 1 | 1 | 1 | 1 | 1 |
| Sulfur | 6.5 | 6.5 | 7 | 7 | 7 |
| Curing agent | | | 1.5 | 3 | 3 |
| Vulcanization accelerator | 1.2 | 1.2 | 1.2 | 1.2 | 1.2 |
| (Parameter) | | | | | |
| tan δ | 0.13 | 0.13 | 0.13 | 0.1 | 0.08 |
| E* (MPa) | 6.5 | 6.5 | 9.4 | 10.5 | 8.7 |
| Dt(mm) | 685 | 663 | 687 | 686 | 684 |

(continued)

| (Parameter) | | | | | |
|---|---|---|---|---|---|
| V($mm^3$) | 44971685 | 28813525 | 45631809 | 44829249 | 44175819 |
| Wt(mm) | 202 | 201 | 203 | 201 | 200 |
| Ht(mm) | 127 | 78 | 128 | 127 | 126 |
| T (mm) | 9.0 | 9.2 | 9.1 | 9.1 | 9.3 |
| Dt-2×Ht(mm) | 431 | 507 | 431 | 432 | 432 |
| tan δ/E* | 0.02000 | 0.02000 | 0.01383 | 0.00952 | 0.00920 |
| ($Dt^2$×π/4)/Wt | 1824 | 1718 | 1826 | 1839 | 1837 |
| (V+1.5×$10^7$)/Wt | 296890 | 217978 | 298679 | 297658 | 295879 |
| (V+2.0×$10^7$)/Wt | 321642 | 242853 | 323309 | 322534 | 320879 |
| (V+2.5×$10^7$)/Wt | 346394 | 267729 | 347940 | 347409 | 345879 |
| Aspect ratio (%) | 63 | 39 | 63 | 63 | 63 |
| [(tan δ/E*)/Wt] ×1000 | 0.099 | 0.100 | 0.068 | 0.047 | 0.046 |
| (tan δ/E*) × T | 0.180 | 0.184 | 0.126 | 0.087 | 0.086 |
| (Evaluation result) | | | | | |
| Steering stability | 88 | 95 | 93 | 100 | 90 |
| Durability | 86 | 91 | 92 | 96 | 100 |
| Comprehensive evaluation | 174 | 186 | 185 | 196 | 190 |

[Experiment 3]

In this experiment, 225 size tires were prepared and evaluated.

After producing the test tires of Examples 3-1 to 3-5 and Comparative Examples 3-1 to 3-5 shown in Tables 5 and 6 in the same manner as in Experiment 1, each parameter was calculated by performing the same procedure. Then, in the same manner, a performance evaluation test was conducted and evaluated. The result in Comparative Example 3-4 was set as 100 for evaluation of changes in steering stability (handling performance), and the result in Comparative Example 3-5 was set as 100 for evaluation of durability performance. The results of each evaluation are shown in Tables 5 and 6.

[Table 5]

| | Example No. | | | | |
|---|---|---|---|---|---|
| | 3-1 | 3-2 | 3-3 | 3-4 | 3-5 |
| SIZE | 225/35R22 | 225/35R22 | 225/35R22 | 225/50R20 | 225/40R21 |
| (Formulation) | | | | | |
| NR | 100 | 100 | 100 | 100 | 100 |
| Carbon black-1 | 55 | 55 | | 55 | 55 |
| Carbon black-2 | | | 50 | | |
| Crosslinking aid | 0.5 | 1.2 | | 0.5 | 0.5 |
| Curable resin component-1 | 3 | | | 3 | 3 |
| Curable resin component-2 | | 5 | 5 | | |
| Cobalt organic acid | 1.0 | 1.0 | 1.0 | 1.0 | 1.0 |
| Zinc oxide | 10 | 11 | 11 | 10 | 10 |
| Anti-aging agent-1 | 1 | 1 | 1 | 1 | 1 |
| Anti-aging agent-2 | 0.5 | 0.5 | 0.5 | 0.5 | 0.5 |

(continued)

| (Formulation) | | | | | |
|---|---|---|---|---|---|
| Stearic acid | 1 | 1 | 1 | 1 | 1 |
| Sulfur | 7 | 7 | 7 | 7 | 7 |
| Curing agent | 1.5 | 3 | 3 | 1.5 | 1.5 |
| Vulcanization accelerator | 1.2 | 1.2 | 1.2 | 1.2 | 1.2 |
| (Parameter) | | | | | |
| tan δ | 0.13 | 0.1 | 0.07 | 0.13 | 0.13 |
| E* (MPa) | 9.4 | 10.5 | 8.7 | 9.4 | 9.4 |
| Dt(mm) | 716 | 719 | 717 | 735 | 714 |
| V($mm^3$) | 36203610 | 36616393 | 36418787 | 52265389 | 40755756 |
| Wt(mm) | 229 | 228 | 230 | 235 | 231 |
| Ht(mm) | 79 | 80 | 79 | 114 | 90 |
| T (mm) | 9.6 | 9.7 | 9.6 | 9.5 | 9.6 |
| Dt-2×Ht(mm) | 558 | 559 | 559 | 507 | 534 |
| tan δ/E* | 0.01383 | 0.00952 | 0.00805 | 0.01383 | 0.01383 |
| ($Dt^2$×π/4)/Wt | 1758 | 1781 | 1755 | 1805 | 1733 |
| (V+1.5×$10^7$)/Wt | 223597 | 226388 | 223560 | 286236 | 241367 |
| (V+2.0×$10^7$)/Wt | 245431 | 248318 | 245299 | 307512 | 263012 |
| (V+2.5×$10^7$)/Wt | 267265 | 270247 | 267038 | 328789 | 284657 |
| Aspect ratio (%) | 34 | 35 | 34 | 49 | 39 |
| [(tan δ/E*)/Wt] ×1000 | 0.060 | 0.042 | 0.035 | 0.059 | 0.060 |
| (tan δ/E*) × T | 0.133 | 0.092 | 0.077 | 0.131 | 0.133 |
| (Evaluation result) | | | | | |
| Steering stability | 125 | 130 | 140 | 126 | 122 |
| Durability | 116 | 115 | 123 | 108 | 113 |
| Comprehensive evaluation | 241 | 245 | 263 | 234 | 235 |

[Table 6]

| | Comparative example No. | | | | |
|---|---|---|---|---|---|
| | 3-1 | 3-2 | 3-3 | 3-4 | 3-5 |
| SIZE | 225/60R20 | 225/50R20 | 225/60R20 | 225/60R20 | 225/60R20 |
| (Formulation) | | | | | |
| NR | 100 | 100 | 100 | 100 | 100 |
| Carbon black-1 | 65 | 65 | 55 | 55 | |
| Carbon black-2 | | | | | 55 |
| Crosslinking aid | | | 0.5 | 1.2 | 1.2 |
| Curable resin component-1 | | | 3 | | |
| Curable resin component-2 | | | | 5 | 5 |
| Cobalt organic acid | 1.0 | 1.0 | 1.0 | 1.0 | 1.0 |
| Zinc oxide | 10 | 10 | 10 | 11 | 11 |

(continued)

| (Formulation) | | | | | |
|---|---|---|---|---|---|
| Anti-aging agent-1 | 1 | 1 | 1 | 1 | 1 |
| Anti-aging agent-2 | 0.5 | 0.5 | 0.5 | 0.5 | 0.5 |
| Stearic acid | 1 | 1 | 1 | 1 | 1 |
| Sulfur | 6.5 | 6.5 | 7 | 7 | 7 |
| Curing agent | | | 1.5 | 3 | 3 |
| Vulcanization accelerator | 1.2 | 1.2 | 1.2 | 1.2 | 1.2 |
| (Parameter) | | | | | |
| tan $\delta$ | 0.13 | 0.13 | 0.13 | 0.1 | 0.08 |
| E* (MPa) | 6.5 | 6.5 | 9.4 | 10.5 | 8.7 |
| Dt(mm) | 776 | 733 | 777 | 778 | 780 |
| V($mm^3$) | 61890670 | 51503396 | 62080258 | 61904251 | 62184635 |
| Wt(mm) | 229 | 234 | 228 | 227 | 226 |
| Ht(mm) | 134 | 113 | 135 | 135 | 136 |
| T (mm) | 9.6 | 9.6 | 9.7 | 9.5 | 9.6 |
| Dt-2$\times$Ht(mm) | 508 | 507 | 507 | 508 | 508 |
| tan $\delta$/E* | 0.02000 | 0.02000 | 0.01383 | 0.00952 | 0.00920 |
| ($Dt^2\times\pi/4$)/Wt | 2065 | 1803 | 2080 | 2094 | 2114 |
| (V+1.5$\times10^7$)/Wt | 335767 | 284203 | 338071 | 338785 | 341525 |
| (V+2.0$\times10^7$)/Wt | 357601 | 305570 | 360001 | 360812 | 363649 |
| (V+2.5$\times10^7$)/Wt | 379435 | 326938 | 381931 | 382838 | 385773 |
| Aspect ratio (%) | 59 | 48 | 59 | 59 | 60 |
| [(tan $\delta$/E*)/Wt] $\times$1000 | 0.087 | 0.085 | 0.061 | 0.042 | 0.041 |
| (tan $\delta$/E*) $\times$ T | 0.192 | 0.192 | 0.134 | 0.090 | 0.088 |
| (Evaluation result) | | | | | |
| Steering stability | 86 | 92 | 88 | 100 | 84 |
| Durability | 84 | 86 | 88 | 91 | 100 |
| Comprehensive evaluation | 170 | 178 | 176 | 191 | 184 |

[Summary of Experiments 1 to 3]

From the results of Experiments 1 to 3 (Tables 1 to 6), for tires of any size, 175 size, 195 size, 225 size, it turns out that it is possible to provide a pneumatic tire in which the steering stability is sufficiently improved and also the durability is sufficiently improved, when (tan $\delta$/E*) is 0.002 or more and 0.017 or less and the above (formula 1) and (formula 2) are satisfied.

Then, it turns out that, by satisfying each of the requirements defined in the present disclosure, it is possible to provide a tire with further improved changes in steering stability and durability performance.

On the other hand, when (tan $\delta$/E*) does not satisfy 0.002 or more and 0.017 or less, or when either of (formula 1) or (formula 2) is not satisfied, it was found that the change in the handling performance between low-speed and high-speed could not be sufficiently reduced, and the durability could not be sufficiently improved.

[Experiment 4]

Next, three types of tires (Examples 4-1 to 4-3) in which the relationship between the virtual volume V and the cross-sectional width Wt did not differ significantly were produced with the same formulation and evaluated in the same

manner. Here, the result in Example 4-1 was set as 100 for the change in steering stability (handling performance), and the result in Example 4-3 was set as 100 for the durability performance.

Further, in this experiment, in addition to the above-described evaluations of steering stability and durability performance, fuel efficiency was also evaluated.

Specifically, each test tire was installed on all wheels of a vehicle (domestic FF vehicle, displacement 2000cc), and after filling air so that the internal pressure was 250kPa, the tire was run on a dry road test course on the dry road surface at a speed of 80km/h. After making a 10km lap, the accelerator was released, and the distance from when the accelerator was turned off until the vehicle stopped was measured as the rolling resistance of each test tire.

Next, the result in Example 4-3 was set as 100, the result for each test tire was indexed based on the following formula, and the rolling resistance during high-speed running was relatively evaluated to evaluate fuel efficiency. The larger the value, the longer the distance from when the accelerator is released until the vehicle stops, the smaller the rolling resistance in a steady state, and the better the fuel efficiency.

$$\text{Fuel efficiency} = [(\text{Result of test tire}) / (\text{Result of Example 4-3})] \times 100$$

(Comprehensive evaluation)

As in Experiments 1 to 3, each evaluation result was totaled to obtain a comprehensive evaluation. Table 7 shows the results of each evaluation.

[Table 7]

| | Example No. | | |
|---|---|---|---|
| | 4-1 | 4-2 | 4-3 |
| SIZE | 175/55R18 | 195/50R19 | 225/45R20 |
| (Formulation) | | | |
| NR | 100 | 100 | 100 |
| Carbon black-1 | 55 | 55 | 55 |
| Carbon black-2 | | | |
| Crosslinking aid | 1.2 | 1.2 | 1.2 |
| Curable resin component-1 | | | |
| Curable resin component-2 | 5 | 5 | 5 |
| Cobalt organic acid | 1.0 | 1.0 | 1.0 |
| Zinc oxide | 11 | 11 | 11 |
| Anti-aging agent-1 | 1 | 1 | 1 |
| Anti-aging agent-2 | 0.5 | 0.5 | 0.5 |
| Stearic acid | 1 | 1 | 1 |
| Sulfur | 7 | 7 | 7 |
| Curing agent | 3 | 3 | 3 |
| Vulcanization accelerator | 1.2 | 1.2 | 1.2 |
| (Parameter) | | | |
| tan $\delta$ | 0.1 | 0.1 | 0.1 |
| E* (MPa) | 10.5 | 10.5 | 10.5 |
| Dt(mm) | 648 | 680 | 711 |
| V($mm^3$) | 30132749 | 35836776 | 43355989 |
| Wt(mm) | 181 | 200 | 224 |
| Ht(mm) | 96 | 98 | 101 |

(continued)

| (Parameter) | | | |
|---|---|---|---|
| T (mm) | 8.5 | 9.1 | 9.4 |
| Dt-2×Ht(mm) | 456 | 484 | 509 |
| tan δ/E* | 0.00952 | 0.00952 | 0.00952 |
| ($Dt^2$×π/4)/Wt | 1822 | 1816 | 1772 |
| (V+1.5×$10^7$)/Wt | 249352 | 254184 | 260518 |
| (V+2.0×$10^7$)/Wt | 276977 | 279184 | 282839 |
| (V+2.5×$10^7$)/Wt | 304601 | 304184 | 305161 |
| Aspect ratio (%) | 53 | 49 | 45 |
| [(tan δ/E*)/Wt] ×1000 | 0.053 | 0.048 | 0.043 |
| (tan δ/E*) × T | 0.081 | 0.087 | 0.090 |
| (Evaluation result) | | | |
| Steering stability | 100 | 106 | 110 |
| Durability | 115 | 105 | 100 |
| | 110 | 105 | 100 |
| Comprehensive evaluation | 325 | 316 | 310 |

Table 7 shows that, when there is no large difference in the relationship between the virtual volume V and the cross-sectional width Wt, all of steering stability, durability performance and fuel efficiency are improved as the cross-sectional width Wt becomes smaller as from less than 205 mm to less than 200 mm, and as the aspect ratio increases. That is, it can be seen a remarkable effect is exhibited.

Although the present invention has been described above based on the embodiments, the present invention is not limited to the above embodiments. Various modifications can be made to the above embodiments within the same and equal range as the present invention. The subject matter of the present invention is defined in claim 1. Preferred embodiments are the subject of dependent claims.

## Claims

**1.** A pneumatic tire having a belt layer radially inward of the tread portion, in which;

the ratio of loss tangent(tan δ) to complex elastic modulus (E*: MPa), (tan δ/ E*), of the rubber composition constituting the belt layer, measured under the conditions of 70°C, frequency of 10 Hz, initial strain of 5%, and dynamic strain rate of 1%, is 0.002 or more and 0.017 or less; and
the tire satisfies following (formula 1) and (formula 4),

$$1816 \leqq (Dt^2 \times \pi/4)/Wt \leqq 2827.4 \cdots \text{(formula 1)}$$

$$[(V + 2.5 \times 10^7)/Wt] \leqq 2.88 \times 10^5 \cdots \text{(formula 4)},$$

where the cross-sectional width of the tire is Wt (mm), the outer diameter is Dt (mm), and the volume of the space occupied by the tire is the virtual volume V ($mm^3$), when the tire is installed on a standardized rim and the internal pressure is 250 kPa,
wherein the virtual volume V ($mm^3$) of the tire is calculated by the following formula:

$$V = [(Dt/2)^2 - \{(Dt/2) - Ht\}^2] \times \pi \times Wt,$$

based on the outer diameter of tire Dt (mm), the tire cross-sectional height Ht (mm), and the cross-sectional width

of tire Wt (mm), in the state the tire is installed on a standardized rim, the internal pressure is 250 kPa and no load is applied.

**2.** The pneumatic tire according to claim 1, wherein, when the outer diameter of the tire is Dt (mm) and the cross-sectional height of the tire is Ht (mm) when the tire is installed on a standardized rim and the internal pressure is 250 kPa, (Dt-2 × Ht) is 470 (mm) or more.

**3.** The pneumatic tire according to any one of claims 1 to 2, which has an aspect ratio of 40% or more.

**4.** The pneumatic tire according to claim 3, which has an aspect ratio of 45% or more.

**5.** The pneumatic tire according to claim 4, which has an aspect ratio of 47.5% or more.

**6.** The pneumatic tire according to claim 5, which has an aspect ratio of 50% or more.

**7.** The pneumatic tire according to any one of claims 1 to 6, wherein the rubber composition constituting the belt layer has a ratio of loss tangent to complex elastic modulus (tan δ/E*) of 0.009 or less.

**8.** The pneumatic tire according to any one of claims 1 to 7, **characterized by** satisfying the following (formula 5).

$$[(\tan\delta/E^*)/Wt]\times 1000 \leqq 0.60 \quad \cdot\cdot\cdot\cdot\cdot \text{(formula 5)}$$

**9.** The pneumatic tire according to claim 8, **characterized by** satisfying the following (formula 6).

$$[(\tan\delta/E^*)/Wt]\times 1000 \leqq 0.55 \quad \cdot\cdot\cdot\cdot\cdot \text{(formula 6)}$$

**10.** The pneumatic tire according to any one of claims 1 to 9, **characterized by** satisfying the following (formula 7)

$$(\tan\delta/E^*)\times T \leqq 1.00 \cdot\cdot\cdot\cdot\cdot \text{(formula 7)}$$

, where the distance from the tread surface to the belt layer is T (mm).

**11.** The pneumatic tire according to claim 10, **characterized by** satisfying the following (formula 8).

$$(\tan\delta/E^*)\times T \leqq 0.85 \cdot\cdot\cdot\cdot\cdot \text{(formula 8)}$$

**12.** The pneumatic tire according to any one of claims 1 to 11, wherein the tread portion has circumferential grooves continuously extending in the tire circumferential direction, and the ratio of the groove width $L_{80}$ at a depth of 80% of the maximum depth of the circumferential groove to the groove width $L_0$ of the circumferential groove on the ground contact surface of the tread portion ($L_{80}$ / $L_0$) is 0.3 to 0.7.

**13.** The pneumatic tire according to any one of claims 1 to 12, wherein the tread portion has a plurality of circumferential grooves continuously extending in the tire circumferential direction, and the total cross-sectional area of the plurality of circumferential grooves is 10 to 30% of the cross-sectional area of the tread portion.

**14.** The pneumatic tire according to any one of claims 1 to 13, wherein the tread portion has a plurality of lateral grooves extending in the tire axial direction, and the total volume of the plurality of lateral grooves is 2.0 to 5.0% of the volume of the tread portion

**15.** The pneumatic tire according to any one of claims 1 to 14, wherein Dt is less than 685 (mm), where Dt (mm) is the outer diameter of the tire when the tire is installed on a standardized rim and the internal pressure is 250 kPa.

**16.** The pneumatic tire according to any one of claims 1 to 15, wherein the cross-sectional width Wt(mm) is less than 205 mm.

**17.** The pneumatic tire according to claim 16, wherein the cross-sectional width Wt (mm) is less than 200 mm.

**18.** The pneumatic tire according to any one of claims 1 to 17, wherein the steel cords in the belt layer extend at an angle of 15° or more and 50° or less with respect to the tire circumferential direction.

**19.** The pneumatic tire according to any one of claims 1 to 18, which is a pneumatic tire for a passenger car.

**Patentansprüche**

**1.** Luftreifen mit einer Gürtelschicht radial innen von dem Laufflächenabschnitt, wobei:

das Verhältnis von Verlusttangens (tan δ) zu komplexem Elastizitätsmodul (E*: MPa) (tan δ/E*) der Kautschukzusammensetzung, die die Gürtelschicht bildet, gemessen unter den Bedingungen von 70°C, Frequenz von 10 Hz, Anfangsdehnung von 5 % und dynamischer Dehnungsrate von 1 %, 0,002 oder mehr und 0,017 oder weniger beträgt; und
der Reifen die folgenden (Formel 1) und (Formel 4) erfüllt,

$$1816 \leqq (Dt^2 \times \pi/4) / Wt \leqq 2827{,}4 \cdot\cdot\cdot\cdot (\text{Formel 1})$$

$$[(V + 2{,}5 \times 10^7) / Wt] \leqq 2{,}88 \times 10^5 \cdot\cdot\cdot (\text{Formel 4}),$$

wobei die Querschnittsbreite des Reifens Wt (mm) ist, der Außendurchmesser Dt (mm) ist und das Volumen des Raums, der von dem Reifen eingenommen wird, das virtuelle Volumen V ($mm^3$) ist, wenn der Reifen auf eine standardisierte Felge aufgezogen ist und der Innendruck 250 kPa beträgt,
wobei das virtuelle Volumen V ($mm^3$) des Reifens durch die folgende Formel berechnet ist:

$$V = [(Dt/2)^2 - \{(Dt/2) - Ht\}^2 ] \times \pi \times Wt,$$

basierend auf dem Außendurchmesser des Reifens Dt (mm), der Reifenquerschnittshöhe Ht (mm) und der Querschnittsbreite des Reifens Wt (mm) in dem Zustand, in dem der Reifen auf eine standardisierte Felge aufgezogen ist, der Innendruck 250 kPa beträgt und keine Last aufgebracht ist.

**2.** Luftreifen nach Anspruch 1, wobei, wenn der Außendurchmesser des Reifens Dt (mm) ist und die Querschnittshöhe des Reifens Ht (mm) ist, wenn der Reifen auf eine standardisierte Felge aufgezogen ist und der Innendruck 250 kPa beträgt, (Dt-2 × Ht) 470 (mm) oder mehr beträgt.

**3.** Luftreifen nach einem der Ansprüche 1 bis 2, der ein Aspektverhältnis von 40 % oder mehr aufweist.

**4.** Luftreifen nach Anspruch 3, der ein Aspektverhältnis von 45 % oder mehr aufweist.

**5.** Luftreifen nach Anspruch 4, der ein Aspektverhältnis von 47,5 % oder mehr aufweist.

**6.** Luftreifen nach Anspruch 5, der ein Aspektverhältnis von 50 % oder mehr aufweist.

**7.** Luftreifen nach einem der Ansprüche 1 bis 6, wobei die Kautschukzusammensetzung, die die Gürtelschicht bildet, ein Verhältnis von Verlusttangens zu komplexem Elastizitätsmodul (tan δ/E*) von 0,009 oder weniger aufweist.

**8.** Luftreifen nach einem der Ansprüche 1 bis 7, **dadurch gekennzeichnet, dass** er die folgende (Formel 5) erfüllt.

$$[(\tan\delta/E^*)/Wt] \times 1000 \leqq 0{,}60 \cdot\cdot\cdot\cdot (\text{Formel 5})$$

**9.** Luftreifen nach Anspruch 8, **dadurch gekennzeichnet, dass** er die folgende (Formel 6) erfüllt.

$$[(\tan\delta/E^*)/Wt] \times 1000 \leqq 0{,}55 \cdot\cdot\cdot\cdot (\text{Formel 6})$$

10. Luftreifen nach einem der Ansprüche 1 bis 9, **dadurch gekennzeichnet, dass** er die folgende (Formel 7) erfüllt

$$(\tan \delta/E^*)\times T \leqq 1{,}00 \cdot \cdot \cdot \cdot \text{(Formel 7)}$$

wobei der Abstand von der Laufflächenoberfläche zu der Gürtelschicht T (mm) ist.

11. Luftreifen nach Anspruch 10, **dadurch gekennzeichnet, dass** er die folgende (Formel 8) erfüllt

$$(\tan \delta/E^*)\times T \leqq 0{,}85 \cdot \cdot \cdot \cdot \text{(Formel 8)}$$

12. Luftreifen nach einem der Ansprüche 1 bis 11, wobei der Laufflächenabschnitt Umfangsrillen aufweist, die sich kontinuierlich in der Reifenumfangsrichtung erstrecken, und das Verhältnis der Rillenbreite $L_{80}$ bei einer Tiefe von 80 % der maximalen Tiefe der Umfangsrille zu der Rillenbreite $L_0$ der Umfangsrille auf der Bodenkontaktoberfläche des Laufflächenabschnitts ($L_{80}$ /$L_0$) 0,3 bis 0,7 beträgt.

13. Luftreifen nach einem der Ansprüche 1 bis 12, wobei der Laufflächenabschnitt eine Vielzahl von Umfangsrillen aufweist, die sich kontinuierlich in der Reifenumfangsrichtung erstrecken, und die Gesamtquerschnittsfläche der Vielzahl von Umfangsrillen 10 bis 30 % der Querschnittsfläche des Laufflächenabschnitts beträgt.

14. Luftreifen nach einem der Ansprüche 1 bis 13, wobei der Laufflächenabschnitt eine Vielzahl von Querrillen aufweist, die sich in der Reifenaxialrichtung erstrecken, und das Gesamtvolumen der Vielzahl von Querrillen 2,0 bis 5,0 % des Volumens des Laufflächenabschnitts beträgt.

15. Luftreifen nach einem der Ansprüche 1 bis 14, wobei Dt weniger als 685 (mm) beträgt, wobei Dt (mm) der Außendurchmesser des Reifens ist, wenn der Reifen auf eine standardisierte Felge aufgezogen ist und der Innendruck 250 kPa beträgt.

16. Luftreifen nach einem der Ansprüche 1 bis 15, wobei die Querschnittsbreite Wt (mm) weniger als 205 mm beträgt.

17. Luftreifen nach Anspruch 16, wobei die Querschnittsbreite Wt (mm) weniger als 200 mm beträgt.

18. Luftreifen nach einem der Ansprüche 1 bis 17, wobei sich die Stahlkorde in der Gürtelschicht in einem Winkel von 15° oder mehr und 50° oder weniger in Bezug auf die Reifenumfangsrichtung erstrecken.

19. Luftreifen nach einem der Ansprüche 1 bis 18, der ein Luftreifen für einen Personenkraftwagen ist.

## Revendications

1. Pneumatique ayant une couche de ceinture radialement vers l'intérieur de la portion de bande de roulement, dans lequel :

   le rapport de tangente de perte (tan δ) à module élastique complexe (E* : MPa), (tan δ/E*), de la composition de caoutchouc constituant la couche de ceinture, mesuré dans les conditions de 70 °C, une fréquence de 10 Hz, une contrainte initiale de 5 %, et un taux de contrainte dynamique de 1 %, est de 0,002 ou plus et de 0,017 ou moins ; et le pneumatique satisfait la (formule 1) et la (formule 4) suivantes,

$$1816 \leq (Dt^2 \times \pi/4) / Wt \leq 2827{,}4 \qquad \text{(formule 1)}$$

$$[(V + 2{,}5 \times 10^7) / Wt] \leq 2{,}88 \times 10^5 \qquad \text{(formule 4)}$$

   où la largeur transversale du pneumatique est Wt (mm), le diamètre externe est Dt (mm), et le volume de l'espace occupé par le pneumatique est le volume virtuel V ($mm^3$), lorsque le pneumatique est installé sur une jante standardisée et que la pression interne est de 250 kPa,
   dans lequel le volume virtuel ($mm^3$) du pneumatique est calculé par la formule suivante :

$$V = [(Dt/2)^2 – \{(Dt/2) – Ht\}^2] \times \pi \times Wt,$$

sur la base du diamètre externe de pneumatique Dt (mm), la hauteur transversale de pneumatique Ht (mm), et la largeur transversale de pneumatique Wt (mm), dans l'état où le pneumatique est installé sur une jante standardisée, la pression interne est de 250 kPa, et aucune charge n'est appliquée.

2. Pneumatique selon la revendication 1, dans lequel, lorsque le diamètre externe du pneumatique est Dt (mm) et que la hauteur transversale du pneumatique est Ht (mm) lorsque le pneumatique est installé sur une jante standardisée et la pression interne est de 250 kPa, (Dt-2 × Ht) est 470 (mm) ou plus.

3. Pneumatique selon l'une quelconque des revendications 1 à 2, qui a un rapport d'aspect de 40 % ou plus.

4. Pneumatique selon la revendication 3, qui a un rapport d'aspect de 45 % ou plus.

5. Pneumatique selon la revendication 4, qui a un rapport d'aspect de 47,5 % ou plus.

6. Pneumatique selon la revendication 5, qui a un rapport d'aspect de 50 % ou plus.

7. Pneumatique selon l'une quelconque des revendications 1 à 6, dans lequel la composition de caoutchouc constituant la couche de ceinture a un rapport de tangente de perte à module élastique complexe (tan δ/E*) de 0,009 ou moins.

8. Pneumatique selon l'une quelconque des revendications 1 à 7, caractérisé en satisfaisant la (formule 5) suivante,

$$[(\tan \delta/E^*)/Wt] \times 1\,000 \leq 0{,}60 \qquad \text{(formule 5)}$$

9. Pneumatique selon la revendication 8, caractérisé en satisfaisant la (formule 6) suivante,

$$[(\tan \delta/E^*/Wt] \times 1\,000 \leq 0{,}55 \qquad \text{(formule 6)}$$

10. Pneumatique selon l'une quelconque des revendications 1 à 9, caractérisé en satisfaisant la (formule 7) suivante

$$(\tan \delta/E^*) \times T \leq 1{,}00 \qquad \text{(formule 7),}$$

où la distance de la surface de bande de roulement à la couche de ceinture est T (mm).

11. Pneumatique selon la formule 10, caractérisé en satisfaisant la (formule 8) suivante

$$(\tan \delta/E^*) \times T \leq 0{,}85 \qquad \text{(formule 8)}$$

12. Pneumatique selon l'une quelconque des revendications 1 à 11, dans lequel la portion de bande de roulement a des sillons circonférentiels s'étendant en continu dans la direction circonférentielle de pneumatique et le rapport de la largeur de sillon $L_{80}$ à une profondeur de 80 % de la profondeur maximum du sillon circonférentiel à la largeur de sillon $L_0$ du sillon circonférentiel sur la surface de contact de sol de la portion de bande de roulement ($L_{80}/L_0$) est de 0,3 à 0,7.

13. Pneumatique selon l'une quelconque des revendications 1 à 12, dans lequel la portion de bande de roulement a une pluralité de sillons circonférentiels s'étendant en continu dans la direction circonférentielle de pneumatique et la zone transversale totale de la pluralité de sillons circonférentiels est de 10 à 30 % de la zone transversale de la portion de bande de roulement.

14. Pneumatique selon l'une quelconque des revendications 1 à 13, dans lequel la portion de bande de roulement a une pluralité de sillons latéraux s'étendant dans la direction axiale de pneumatique et le volume total de la pluralité de sillons latéraux est de 2,0 à 5,0 % du volume de la portion de bande de roulement.

15. Pneumatique selon l'une quelconque des revendications 1 à 14, dans lequel Dt est de moins de 685 (mm), où Dt (mm) est le diamètre externe du pneumatique lorsque le pneumatique est installé sur une jante standardisée et que la

pression interne est de 250 kPa.

**16.** Pneumatique selon l'une quelconque des revendications 1 à 15, dans lequel la largeur transversale (Wt) (mm) est de moins de 205 mm.

**17.** Pneumatique selon la revendication 16, dans lequel la largeur transversale Wt (mm) est de moins de 200 mm.

**18.** Pneumatique selon l'une quelconque des revendications 1 à 17, dans lequel les cordes d'acier dans la couche de ceinture s'étendent à un angle de 15° ou plus et de 50° ou moins par rapport à la direction circonférentielle de pneumatique.

**19.** Pneumatique selon l'une quelconque des revendications 1 à 18, qui est un pneumatique pour voiture de tourisme.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018178034 A
- JP 2019089911 A
- WO 2018186367 A
- JP 2019206643 A
- US 2017021669 A1
- JP 2018167753 A
- JP 2008156418 A
- US 4414370 A
- JP 59006207 A
- JP 5058805 A
- JP 1313522 A
- US 5010166 B


### Non-patent literature cited in the description


- *Toa Synthetic Research Annual Report TREND2000*, vol. 3, 42-45